# EUROPEAN PATENT APPLICATION

(11) **EP 3 866 244 A1**
(43) Date of publication of application: **18.08.2021**
(21) Application number: 21166724.1
(22) Date of filing: 04.12.2015
(51) Int. Cl.: H01M 10/0525, H01M 10/058, H01M 50/417, H01M 50/426, H01M 50/434, H01M 50/446, H01M 50/409, H01M 50/403, H01M 50/411, H01M 50/431, H01M 50/44, H01M 50/449

(54) **IMPROVED COATED SEPARATORS FOR LITHIUM BATTERIES AND RELATED METHODS**

(30) Priority: 05.12.2014 US 201462087953 P
(62) Divisional of application: 15865326.1
(71) Applicant: Celgard, LLC, Charlotte, NC 28273 (US)
(72) Inventor: ZHANG, Zhengming, South Carolina, 29732 (US); HE, Jinbo, North Carolina, 15629 (US); LI, Xuefa, North Carolina, 28173 (US); JEON, Insik, South Carolina, 29708 (US); SHI, Lie, North Carolina, 28104 (US); WATSON, Jill V., South Carolina, 29710 (US)
(74) Representative: Tomkins & Co

(57) **Abstract**

In accordance with at least selected embodiments, new or improved ceramic coated separators, membranes, films, or the like for use in lithium batteries, new or improved batteries including such ceramic coated separators, membranes, films, or the like, and methods of making or using such ceramic coated separators, membranes, films or the like are disclosed. In accordance with at least certain embodiments, new or improved aqueous or water-based polymeric coated separators, membranes, films, or the like are disclosed. In accordance with at least particular embodiments, new or improved aqueous or water-based polyvinylidene fluoride (PVDF) or polyvinylidene difluoride (PVDF) homopolymer or co-polymers of PVDF with hexafluoropropylene (HFP or [-CF(CF₃)-CF₂-]), chlorotrifluoroethylene (CTFE), vinylidene fluoride (VF₂₋HFP), tetrafluoroethylene (TFE), and/or the like, blends and/or mixtures thereof, coated separators, membranes, films or the like, new or improved porous separators for use in lithium batteries, new or improved coating or application methods for applying a coating or ceramic coating to a separator for use in a lithium battery, new or improved PVDF or PVDF:HFP films or membranes, and/or the like are disclosed.

## Description

### CROSS-REFERENCE TO RELATED APPLICATIONS

This application claims priority to and the benefit of co-pending U.S. Provisional Patent Application Serial Number 62/087,953, filed December 5, 2014, which is incorporated herein by reference in its entirety.

### FIELD OF THE INVENTION

Various new, optimized or improved coated separators, membranes, films, or the like for use in lithium batteries, such as lithium ion batteries or lithium ion polymer batteries, new or improved batteries including such coated separators, membranes, films, or the like, and methods of making or using such coated separators, membranes, films or the like are disclosed herein. In accordance with at least selected embodiments, aspects or objects, new, optimized and/or improved ceramic coated separators, membranes, films, or the like for use in lithium batteries, such as lithium ion batteries or lithium ion polymer batteries, new or improved batteries including such ceramic coated separators, membranes, films, or the like, and methods of making or using such ceramic coated separators, membranes, films or the like are disclosed herein. In accordance with at least certain embodiments, aspects or objects, new or improved aqueous or water-based polymeric coated separators, membranes, films, or the like for use in lithium batteries, such as lithium ion batteries or lithium ion polymer batteries, new or improved batteries including such aqueous or water-based polymeric coated separators, membranes, films, or the like, and methods of making or using such aqueous or water-based polymeric coated separators, membranes, films or the like are disclosed herein. In accordance with at least particular embodiments, aspects or objects, new or improved aqueous or water-based polyvinylidene fluoride (PVDF) polymeric coated separators, membranes, films, or the like for use in lithium batteries, such as lithium ion batteries or lithium ion polymer batteries, new or improved batteries including such aqueous or water-based polyvinylidene fluoride (PVDF) polymeric coated separators, membranes, films, or the like, and methods of making or using such aqueous or water-based polyvinylidene fluoride (PVDF) polymeric coated separators, membranes, films, or the like, new or improved polyvinylidene fluoride or polyvinylidene difluoride (PVDF) homopolymer or copolymers of PVDF and/or vinylidene fluoride (VF₂) with hexafluoropropylene (HFP or [-CF(CF₃)-CF₂-]), chlorotrifluoroethylene (CTFE), tetrafluoroethylene (TFE), and/or the like, blends and/or mixtures thereof, coated separators, membranes, films or the like, new or improved porous separators for use in lithium batteries, new or improved coating or application methods for applying a coating or ceramic coating to a separator for use in a lithium battery, new or improved PVDF or PVDF:HFP films or membranes, and/or the like are disclosed herein.

### BACKGROUND OF THE INVENTION

Various methods exist to modify the performance properties of porous or microporous membranes used as separators in lithium batteries (such as, for example, lithium ion batteries). One such method is the application of a porous coating onto the surface of a porous or microporous membrane in order to change or enhance the chemical and physical properties of the coated porous separator in a rechargeable lithium ion battery. A porous coating layer containing ceramic particles in a polymer matrix or binder may have thermal stability due to the presence of the ceramic particles. At temperatures above the melt temperature of the polymer matrix, the ceramic particles may retain their physical integrity and serve to maintain the physical separation barrier between the electrodes in a lithium ion battery, preventing contact of the cathode and anode, which contact likely would result in a major internal short.

In a ceramic particle/polymeric matrix or binder coating composition, the polymeric matrix or binder may serve to provide adhesion between the ceramic particles, adhesion of the coating to the porous base membrane, and/or adhesion of the ceramic coated separator to the electrode or electrodes (adjacent or abutting the ceramic coating) in a lithium ion battery. Good contact between separator and electrodes may be important for optimal cycle life in a lithium battery, as the presence of voids or spaces between a separator and the electrodes may have an adverse effect on long term cycle life or battery performance.

Known ceramic/polyvinylidene fluoride (PVDF) coatings commonly are non-aqueous, solvent-based systems, which use solvents such as acetone, dimethyl acetamide, N-methyl pyrrolidone, combinations of these, or the like. PVDF has been used in such coatings because, for example, PVDF is inert and stable in a lithium ion battery system. However, the non-aqueous solvents used to dissolve PVDF often are volatile and may require careful use, disposal and/or recycling, as they may not be environmentally friendly and may produce unwanted emissions if not handled properly. Coating processes based on non-aqueous systems can be costly, may have an unfavorable environmental footprint, and may be difficult to handle due to safety concerns related to their flammability.

Hence, there is a need for novel, optimized and/or improved coated separators for at least certain applications having or produced using an aqueous or water-based coating system, which may be preferred under at least selected circumstances, compared with certain non-aqueous or solvent based coating systems, due to, for example, performance, cost, environmental, safety, and/or economic factors.

### SUMMARY OF THE INVENTION

At least selected embodiments, aspects or objects of the present invention may address the above mentioned need for novel, optimized and/or improved coated separators for at least certain applications having or produced using an aqueous or water-based coating system, which may be preferred under at least selected circumstances, compared with certain non-aqueous or solvent based coating systems, due to, for example, performance, cost, environmental, safety, and/or economic factors. In accordance with at least one possibly preferred particular embodiment, a ceramic coated separator coated on at least one side is produced using an aqueous or water-based coating mixture, slurry or system.

In accordance with at least selected embodiments, aspects or objects, the present application or invention is directed to various new, optimized and/or improved coated separators, membranes, films, or the like for use in lithium batteries, such as lithium ion batteries or lithium ion polymer batteries, new or improved batteries including such coated separators, membranes, films, or the like, and/or methods of making or using such coated separators, membranes, films or the like. In accordance with at least certain selected embodiments, aspects or objects, the present application or invention is directed to new or improved ceramic coated separators, membranes, films, or the like for use in lithium batteries, such as lithium ion batteries or lithium ion polymer batteries, new or improved batteries including such ceramic coated separators, membranes, films, or the like, and/or methods of making or using such ceramic coated separators, membranes, films or the like. In accordance with at least certain embodiments, aspects or objects, the present application or invention is directed to new or improved aqueous or water-based polymeric coated separators, membranes, films, or the like for use in lithium batteries, such as lithium ion batteries or lithium ion polymer batteries, new or improved batteries including such aqueous or water-based polymeric coated separators, membranes, films, or the like, and/or methods of making or using such aqueous or water-based polymeric coated separators, membranes, films or the like. In accordance with at least particular embodiments, aspects or objects, the present application or invention is directed to new or improved aqueous or water-based polyvinylidene fluoride (PVDF) polymeric coated separators, membranes, films, or the like for use in lithium batteries, such as lithium ion batteries or lithium ion polymer batteries, new or improved batteries including such aqueous or water-based polyvinylidene fluoride (PVDF) polymeric coated separators, membranes, films, or the like, and/or methods of making or using such aqueous or water-based polyvinylidene fluoride (PVDF) polymeric coated separators, membranes, films or the like, new or improved polyvinylidene fluoride or polyvinylidene difluoride (PVDF) homopolymer or co-polymers of PVDF and/or vinylidene fluoride (VF₂) with hexafluoropropylene (HFP or [-CF(CF₃)-CF₂-]), chlorotrifluoroethylene (CTFE), tetrafluoroethylene (TFE), and/or the like, blends and/or mixtures thereof, coated separators, membranes, films or the like, new or improved porous (or otherwise ionically conductive) separators for use in lithium batteries, new or improved coating or application methods for applying a coating or ceramic coating to a separator for use in a lithium battery, new or improved PVDF or PVDF:HFP films or membranes, and/or the like.

In at least certain embodiments or examples, the present invention provides a separator for a lithium battery (such as, for example, a lithium ion battery), which separator comprises a composite having: (a) a porous or microporous substrate (having single or multiple layers or plies of the same or different materials), and (b) a coating layer formed on at least one surface of the substrate, wherein the coating layer comprises or is formed from at least one aqueous or water-based polymeric binder or matrix. The aqueous or water-based polymeric binder or matrix may include one or more typically water-insoluble polymers (such as PVDF), and in some embodiments, the aqueous or water-based polymeric binder or matrix may further include one or more typically water-soluble polymers (such as, by way of example, polyvinyl alcohol (PVA) or polyacrylic acid (PAA)). At least selected embodiments or examples of the present invention further provide at least one process for producing a separator for a lithium ion battery, which process includes forming a composite by providing a porous or microporous substrate (a preferred substrate may have a safety shutdown function) and coating a coating layer on at least one surface of the substrate, wherein the coating layer includes at least one aqueous or water-based polymeric binder or matrix. The aqueous or water-based polymeric binder or matrix may include one or more typically water-insoluble polymers (such as PVDF), and in some embodiments, the aqueous or water-based polymeric binder or matrix may further include one or more typically water-soluble polymers (such as, by way of example, polyvinyl alcohol or polyacrylic acid). At least certain selected embodiments or examples of the present invention further provide for the use of the inventive separators described herein in a lithium battery such as a lithium ion battery.

In at least certain embodiments or examples, the present invention provides a separator for a lithium battery (such as, for example, a lithium ion battery), which separator comprises a porous or microporous composite having: (a) a porous or microporous substrate (having single or multiple layers or plies of the same or different materials), and (b) a porous or microporous coating layer formed on at least one surface of the substrate, wherein the coating layer is formed from a mixture of particles (such as ceramic particles, fibers, powders, beads, or the like) and an aqueous or water-based polymeric binder or matrix. The aqueous or water-based polymeric binder or matrix may include one or more typically water-insoluble polymers (such as PVDF), and in some embodiments, the aqueous or water-based polymeric binder or matrix may further include one or more typically water-soluble polymers (such as, by way of example, polyvinyl alcohol or polyacrylic acid). At least selected embodiments or examples of the present invention further provide at least one process for producing a separator for a lithium ion battery, which process includes forming a porous or microporous composite by providing a porous or microporous substrate and coating a coating layer on at least one surface of the substrate, wherein the coating layer includes a mixture of particles and an aqueous or water-based polymeric matrix or binder. At least certain selected embodiments or examples of the present invention further provide for the use of the inventive separators described herein in a lithium battery such as a lithium ion battery.

The separators described herein may be advantageous, for example, because of their high temperature integrity and improved safety performance when used in a lithium ion battery. An exemplary improved separator for a lithium ion battery is coated with a mixture of one or more types of particles (for example, organic or inorganic particles, where such organic particles may include, but are not limited to, high temperature polymer particles, and where such inorganic particles may include, but are not limited to, ceramic particles) and one or more aqueous or water-based polymeric binders or materials, where the aqueous or water-based polymeric binders or materials may include one or more typically water-insoluble polymers (such as PVDF or various copolymers thereof) and may further include one or more typically water-soluble polymers (such as, by way of example, polyvinyl alcohol or polyacrylic acid). The make-up of the coating layer, and the way it is applied to the substrate, among other features, may lead to better adhesion of the ceramic coating layer to the substrate and/or to one or more of the electrodes and may lead to better adhesion among and between the ceramic particles and the aqueous or water-based polymeric binder or matrix. Additionally, the coating layer may prevent oxidation reactions from occurring at the interface of the coated separator and at least one of the electrodes of the battery, may prevent shorts, may reduce shrinkage, may provide thermal stability, may extend shutdown performance, and/or may improve the safety and/or overall performance of the separator, separator production, the cell, the battery, the lithium ion battery, the product, device or vehicle including the cell or battery, and/or the like.

Not wishing to be bound by theory, oxidation and/or reduction reactions may occur during the formation stage of a lithium ion battery and/or during charging or discharging of a lithium ion battery, and these reactions may generate byproducts that can harm battery systems. Coatings may slow down or may prevent oxidation reactions that could occur for uncoated polypropylene (PP) or polyethylene (PE) separators. Ceramics, such as aluminum oxide (Al₂O₃), are chemically inert and do not undergo oxidation with an electrolyte. Oxidative stability improvement may be obtained by placing the coated side of the separator described herein facing or against one or more electrodes in the battery, by way of example, the cathode or positive electrode.

Furthermore, an exemplary inventive ceramic coating may enable a rechargeable lithium ion battery to reach a higher voltage level and/or may result in an increase in the energy density in a rechargeable lithium ion battery.

In various embodiments herein, then, the invention is directed to an improved, new, optimized, and/or modified separator for use with a cell or battery, which separator includes a particular substrate and a particular coating, which coating is optimized based on the content and type of particles (e.g., inorganic particles, such as ceramic particles, or organic particles, such as high temperature polymer particles, or combinations thereof), where the particles are optimized based on their particle size, shape, and type, and the content and type of water-based or aqueous polymeric binder or matrix, where the aqueous or water-based polymeric binder or matrix may include one or more typically water-insoluble polymers (such as PVDF) possibly combined, in some embodiments, with one or more typically water-soluble polymers (such as such as, by way of example, polyvinyl alcohol or polyacrylic acid), and where the binder and/or matrix material(s) are optimized based on water content, polymer content, monomer content, co-monomer content, co-polymer content, solubility in water, and/or insolubility in water.

Additionally, such an improved separator may have or exhibit one or more of the following characteristics or improvements: (a) desirable level of porosity as observed by SEMs and as measured; (b) desirable Gurley numbers (ASTM Gurley and/or JIS Gurley) to show permeability; (c) desirable thickness such that desirable Gurley and other properties are obtained; (d) a desired level of coalescing of the one or more of the polymeric binders such that the coating is improved relative to known coatings; (e) desirable properties due to processing of the coated separator, including, but not limited to, how the coating is mixed, how the coating is applied to the substrate, and how the coating is dried on the substrate; (f) improved thermal stability as shown, for example, by desirable behavior in hot tip hole propagation studies; (g) reduced shrinkage when used in a lithium battery, such as a lithium ion battery; (h) improved adhesion between the ceramic particles in the coating; (i) improved adhesion between the coating and the substrate; and/or (j) improved adhesion between the coated separator and one or both electrodes of a battery. These objects and other related attributes of an improved coated separator are described in more detail below.

### BRIEF DESCRIPTION OF THE DRAWINGS

Figure 1 is a scanning electron micrograph (SEM) image of the surface of a separator formed in accordance with inventive Example 1.
Figure 2 is an SEM image of the surface of a separator formed in accordance with Example 2.
Figure 3 is an SEM image of the surface of a separator formed in accordance with Example 3.
Figure 4 is an SEM image of the surface of a separator formed in accordance with Example 6.
Figure 5 is an SEM image of the surface of a separator formed in accordance with Example 7.
Figure 6(a) is an SEM image of the surface of a separator formed in accordance with Example 8.
Figure 6(b) is an SEM image, at a higher magnification, of the surface of the separator formed in accordance with Example 8.
Figure 6(c) is a cross-sectional SEM image of the separator formed in accordance with Example 8.
Figure 7 is an SEM image of a side view of a separator having a polymeric coating layer thereon.
Figure 8 is an SEM image of the surface of a separator formed in accordance with Comparative Example 1 (CE1).
Figure 9(a) is a photograph showing results of a hot tip hole propagation study for a separator formed in accordance with Example 3.
Figure 9(b) is a photograph showing results of a hot tip hole propagation study for an uncoated polyethylene separator.
Figure 10(a) is a photograph showing results of a hot tip hole propagation study for a separator formed in accordance with Example 6.
Figure 10(b) is a photograph showing results of a hot tip hole propagation study for an uncoated polypropylene separator.
Figure 11 is a photograph showing results of a hot tip hole propagation study for a separator formed in accordance with Example 8.
Figure 12 is a schematic drawing of a hot tip hole propagation testing apparatus as used in various embodiments herein to test separators.
Figure 13 is an SEM image of the surface of a separator formed in accordance with Example 9.
Figure 14 is a cross-sectional SEM image of the separator formed in accordance with Example 9.

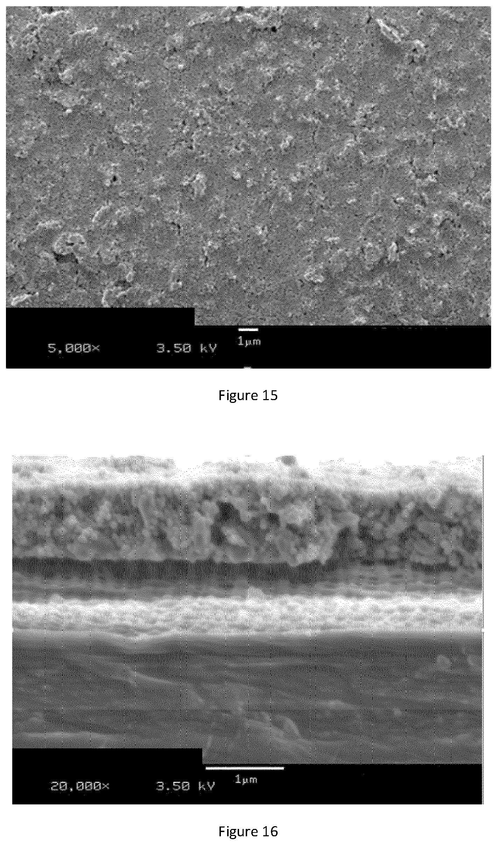

Figure 15 is an SEM image of the surface of a separator formed in accordance with Example 10.
Figure 16 is a cross-sectional SEM image of the separator formed in accordance with Example 10.
Figure 17 is an SEM image of the surface of a separator formed in accordance with Example 11.
Figure 18 is an SEM image of the surface of a separator formed in accordance with Example 12.

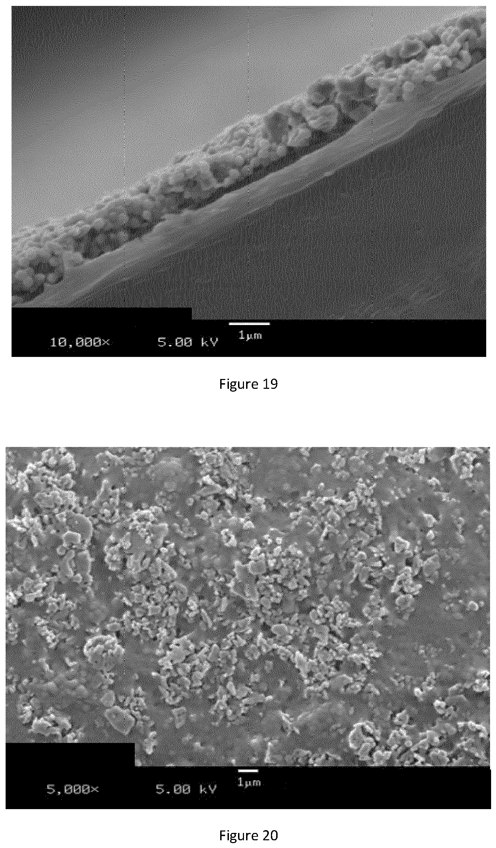

Figure 19 is a cross-sectional SEM image of the separator formed in accordance with Example 12.
Figure 20 is an SEM image of the surface of a separator formed in accordance with Example 13.

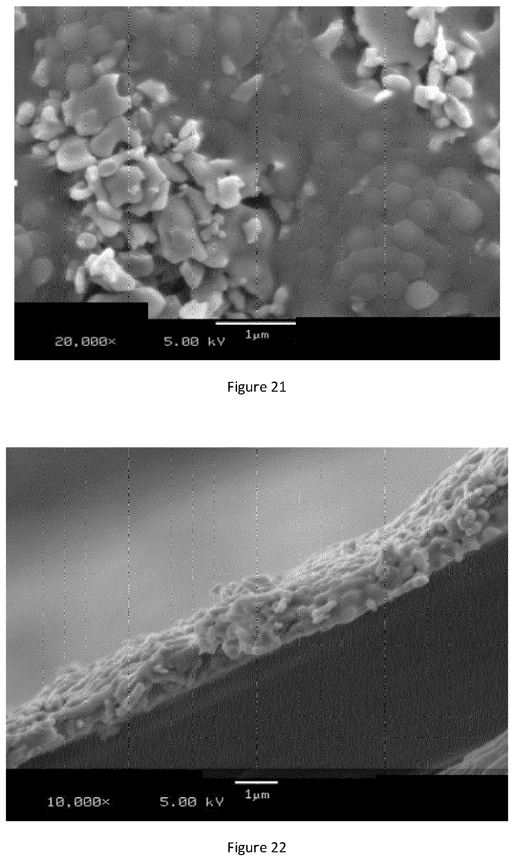

Figure 21 is an SEM image, at a higher magnification, of the surface of the separator formed in accordance with Example 13.
Figure 22 is a cross-sectional SEM image of the separator formed in accordance with Example 13.

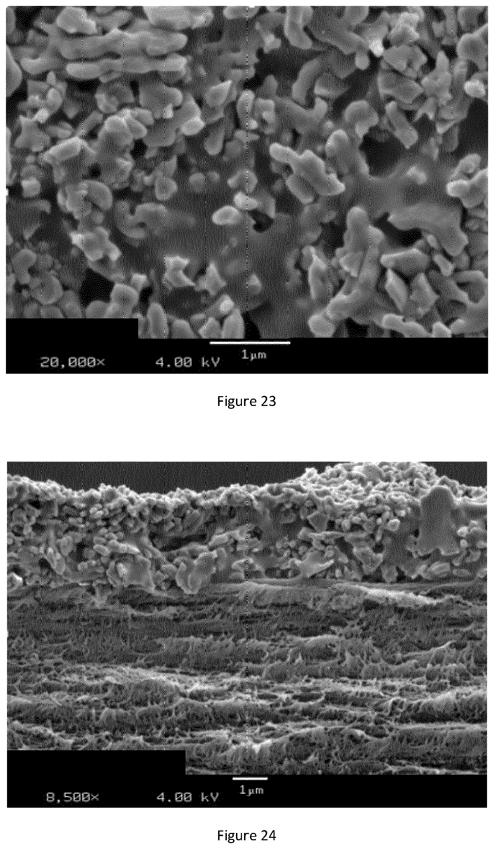

Figure 23 is an SEM image of the surface of a separator formed in accordance with Example 14.
Figure 24 is a cross-sectional SEM image of the separator formed in accordance with Example 14.
Figure 25 is an SEM image of the surface of a separator formed in accordance with Example 15.
Figure 26 is a cross-sectional SEM image of the separator formed in accordance with Example 15.
Figure 27 is an SEM image of the surface of a separator formed in accordance with Example 16.
Figure 28 is an SEM image of the surface of a separator formed in accordance with Example 17.

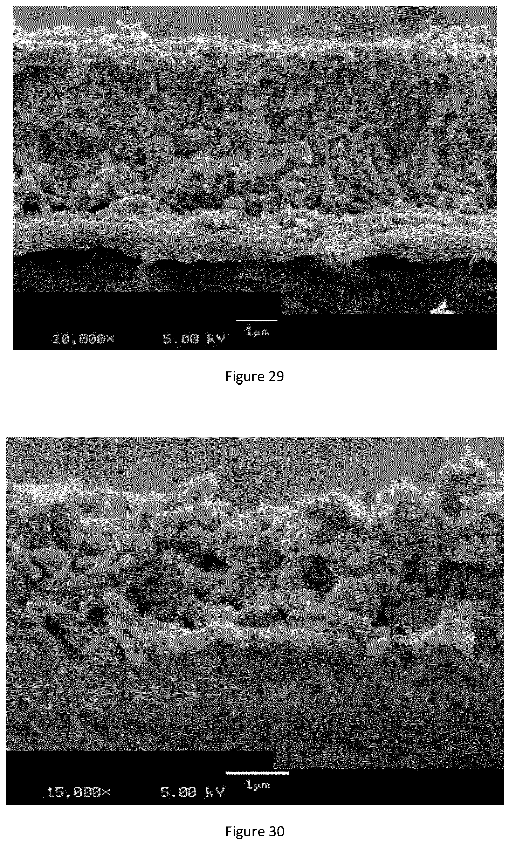

Figure 29 is a cross-sectional SEM image of the separator formed in accordance with Example 17.
Figure 30 is a cross-sectional SEM image of at least a portion of the separator formed in accordance with Example 17.

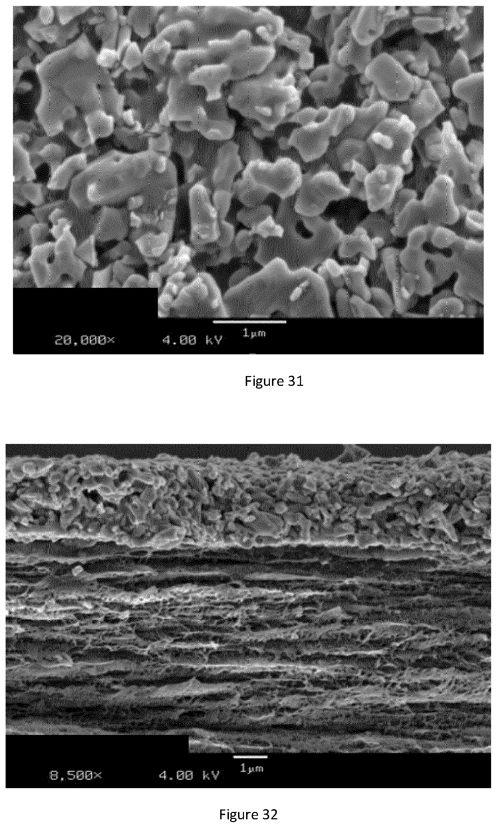

Figure 31 is an SEM image of the surface of a separator formed in accordance with Example 18.
Figure 32 is a cross-sectional SEM image of the separator formed in accordance with Example 18.
Figure 33 is a photograph showing a peel test result for the separator formed in accordance with Example 17.
Figure 34 is a Hot Electrical Resistance plot of Electrical Resistance measured as a function of temperature for the separators formed in accordance with Example 14, Example 18, as well as an uncoated PE base membrane.

### DETAILED DESCRIPTION OF THE INVENTION

In accordance with at least selected embodiments or objects, the present invention provides a separator for a lithium battery, such as, for example, a lithium ion battery (though the use of the separator is contemplated with other batteries as well), which separator comprises a porous composite having a microporous substrate and a coating layer formed on at least one surface of the porous substrate, wherein the coating layer is formed from particles and/or a mixture of particles (inorganic and/or organic particles) and an aqueous or water-based polymeric binder. The present invention further provides a process for producing a separator for a lithium ion battery, which process involves forming a porous composite by providing a porous substrate, such as a polyolefin substrate, and applying a coating layer on at least one surface of the porous substrate, wherein the coating layer includes particles and/or a mixture of particles (inorganic and/or organic particles) and an aqueous or water-based polymeric binder, where the aqueous or water-based polymeric binder may include one or more typically water-insoluble polymers (such as PVDF) and may further include one or more typically water-soluble polymers (such as, by way of example, polyvinyl alcohol or polyacrylic acid). This invention further provides for the use of a separator in a lithium ion battery.

The separator described herein may be advantageous because of its high temperature integrity and improved safety performance when used in a lithium ion battery. This improved, optimized, new, or modified separator for a lithium ion battery is coated with a mixture of one or more types of particles (e.g., inorganic particles, such as, for example, ceramic particles, and/or organic particles, such as, for example, high temperature polymer particles) and one or more aqueous or water-based polymeric binders, where an aqueous or water-based polymeric binders may include one or more typically water-insoluble polymers (such as PVDF and/or various copolymers thereof) and may, in certain embodiments, further include one or more typically water-soluble polymers (such as, by way of example, polyvinyl alcohol or polyacrylic acid). The coating layer may prevent oxidation reactions from occurring at the interfaces of the coated separator and the electrodes in the battery and/or may improve the safety and/or the overall performance of a lithium ion battery. In embodiments where one surface of a separator substrate is coated with the above-described coating mixture, the coated surface may be placed against either electrode in a lithium ion battery, and in certain embodiments, against the cathode. Furthermore, in other embodiments, more than one surface of a separator substrate may be coated with the above-described coating mixture.

Preferred particles suitable for the coating described herein range in size from about 50 nm to about 1,000 nm in average diameter, preferably about 50 nm to about 800 nm in average diameter, and most preferably about 50 nm to about 600 nm in average diameter. The particles can be of a variety of shapes, such as, but not limited to, rectangular, spherical, elliptical, cylindrical, oval, dog-bone shaped, or amorphous. The "particles" can also be fibrous-shaped or fibers. The particles in some embodiments are quite small and thus may have a large surface area per gram, which may enhance the absorption performance of the coating material and the interaction of the particles with the polymer matrix. Furthermore, in some embodiments, the particles, as purchased from the particle manufacturer, may, for example, be pre-coated with some material to enhance the compatibility of the particle with a polymeric matrix, to improve, possibly making more uniform, the dissolution of the particles in some portion of the polymer matrix, the dispersibility of the particles in the polymer matrix, to avoid particle agglomeration, and/or to stabilize the particles in the coating slurry.

In some embodiments, organic particles may be used, such as, for example, high temperature polymer particles. In various other embodiments, inorganic particles may be used to prepare the coatings described herein. Examples of inorganic particles suitable for the coating discussed herein include various inorganic particles, such as ceramics, metal oxides, and may include aluminum oxide (Al₂O₃), titanium oxide (TiO₂), silicon oxide (SiO₂), zinc oxide (ZnO₂), metal hydroxides, metal carbonates, silicates, kaolin, talc, minerals, glass, and the like, as well as mixtures thereof. The type of ceramic may be selected based on its electrochemical stability, wettability with electrolyte, oxidation resistance, and chemical inertness in a lithium ion battery.

In one or more embodiments, Al₂O₃ particles may be used as the ceramic particles in the coating for the battery separator. Not wishing to be bound by theory, Al₂O₃ may act as a scavenger for "junk" chemical species, species that could possibly cause capacity fade in a lithium ion battery. Additionally, Al₂O₃ particles may have excellent electrolyte wettability and good affinity to the electrolyte, which may result in good electrolyte absorptivity and may endow the lithium ion battery with better cycling performance. In terms of ion mobility, the coating layer described herein has an internal structure which is finely porous. The irregular shapes and stacking of ceramic particles in this coating layer create a coating layer which is not so dense as to limit the transport of ions through the battery system, as evidenced by the coating layer having a measurable Gurley, which is a measurement of air permeability. The finely porous internal structure of the ceramic/polymer coating may provide a tortuous, winding pathway for the electrolyte ions to travel as they migrate through the coating layer. The high surface area of nanoscale-sized ceramic particles may increase the amount of electrolyte wetting and may enhance electrolyte absorption resulting in improved overall battery performance. The tortuous pathway existing in the stacked arrangement of the ceramic particles may present a longer pathway the ions must travel, not only through the coating layer, but also at the ceramic/electrode interface which together may serve to block lithium dendrite growth.

In certain embodiments of the coating described herein, the preferred, typically water-insoluble polymer may be selected from, for example, polyvinylidene fluoride (PVDF) homopolymer or copolymers of PVDF and/or vinylidene fluoride (VF₂) with hexafluoropropylene (HFP or [-CF(CF₃)-CF₂-]), or chlorotrifluoroethylene (CTFE), or tetrafluoroethylene (TFE), and/or the like and mixtures thereof. The preferred polymers may provide the matrix for the ceramic particles and may serve as the binding agent (or binder) to provide and promote adhesion between 1) the particles in the ceramic/polymer coating layer, 2) the coating layer and the base substrate or porous membrane, and/or 3) the coated separator membrane and the battery electrodes. Good adhesion between particles may be important so that the resulting coating layer has physical integrity and does not flake apart. Good adhesion between the ceramic/polymer coating layer and the base substrate and between the coated separator membrane and the battery electrodes may be important to ensure sufficient and optimal ion conductivity of the electrolyte during charge and discharge cycles in the battery and to reduce impedance to the ion mobility at such boundary layers.

In addition, the polymer binder, such as a water-insoluble polymer component like PVDF polymer or copolymer, and the ceramic particles, in certain preferred embodiments, should be chemically stable with the electrolyte and not react or dissolve in the electrolyte, which could result in the production of undesirable byproducts which may adversely affect the battery performance. In this way, the PVDF polymer or copolymer acts like a filler within the coating.

In one particular embodiment, the coating described herein is formed from a solution (or suspension or slurry) comprising one or more PVDF homopolymers or copolymers in water. PVDF homopolymers and copolymers are typically not soluble in water. In the prior art, PVDF homopolymer and copolymers traditionally are dissolved in solvents, such as acetone or the like. The coating described herein results from the application of a slurry that contains ceramic particles and an aqueous-based PVDF solution or suspension, where the PVDF solution or suspension preferably is made stable using one or more performance additives. Such performance additives may include, but are not limited to, de-bubbling agents, de-foaming agents, fillers, anti-settling agents, levelers, rheology modifiers, wetting agents, pH buffers, surfactants, including fluorinated and non-fluorinated surfactants, thickeners, emulsification agents or emulsifiers, including fluorinated and non-fluorinated emulsifiers, and fugitive adhesion promoters. Some of these performance additives are discussed in U.S. Patent Publication Numbers 2012/0015246 and 2013/0079461, now U.S. Patent Number 9,068,071, which are incorporated by reference herein. The coating formulation described herein combines the water-insoluble PVDF polymer or copolymer in an aqueous solution or suspension with the preferred ceramic particles in a stable, uniformly dispersed slurry.

In some embodiments, it is the typically water-insoluble polymer (such as PVDF polymer or copolymer) that helps adhere the ceramic particles together at various points of contact.

In other particular embodiments, the coating described herein includes the typically water-insoluble polymer described just above, but further includes one or more typically water-soluble binders or components or polymers. Thus, in various embodiments described herein the coating applied to a microporous base membrane or substrate includes at least two components, including particles, such as organic and/or inorganic particles, and one or more typically water-insoluble components such as a typically water-insoluble polymer such as a PVDF homopolymer or copolymer. In various other embodiments, the coating applied to a microporous base membrane or substrate includes at least three components, including particles, such as organic and/or inorganic particles, one or more typically water-insoluble components (such as a PVDF copolymer or homopolymer), and one or more typically water-soluble binders or components or polymers.

In some cases, the one or more typically water-soluble polymers or binders may enhance the adhesion of the ceramic particles to each other at various points of contact and/or may achieve excellent adhesion of the polymer ceramic coating to the base microporous substrate and/or to one or more electrodes. Examples of water-soluble polymers or binders useful herein may include, but are not limited to, polyvinyl alcohols, carboxymethyl cellulose, polylactams, polyacrylic acid, polyacrylates, and polyvinyl acetate. In some instances, the preferred water-soluble polymers or components may provide the matrix for the ceramic particles and may serve as the binding agent (or binder) to provide and promote adhesion between 1) the particles in the ceramic/polymer coating layer and/or 2) the coating layer and the base substrate or porous membrane and/or the coating layer and one or more electrodes.

The slurry containing the aqueous solution of water-insoluble polymer, such as PVDF, the optional one or more water-soluble binders or polymer or components and the ceramic particles should be properly mixed in order to minimize or avoid undesirable agglomeration of the ceramic particles, in order to avoid undesirable increases in viscosity, in order to ensure uniform mixing of the ceramic particles in the matrix, in order to obtain a smooth, uniform coating, and/or in order to achieve a stable coating slurry. The method of mixing the ceramic particles with the aqueous solution of water- insoluble polymer, such as PVDF, and in some embodiments described herein, one or more water-soluble binders or polymers, to form a coating slurry may be important in the overall success of producing a stable, uniformly mixed coating slurry that is free from, or minimizes, particle agglomeration and settling and that results in an improved separator when applied to a porous or microporous substrate.

The coating slurry described herein, which may exhibit Newtonian rheology, may be made using high shear mixing, for example, at 5,000 to 6,000 rpm, alone and/or combined with Ball milling (or Ball mill mixing) to produce a well-mixed, stable ceramic/PVDF slurry and, in some embodiments, to produce a well-mixed, stable ceramic/water-insoluble PVDF/water-soluble binder(s) slurry. Such a well-mixed, stable ceramic/PVDF slurry and, in some embodiments, a well-mixed, stable ceramic/water- insoluble PVDF/water-soluble binder(s) slurry, may exhibit excellent dispersion, meaning the slurry may be stable, may be homogenously mixed at the time of mixing, and may remain stable and homogeneously mixed, thereby avoiding much settling during any time between mixing and application of the slurry to the porous membrane substrate. Although the viscosity may be independent of shear rate, certain non-preferred methods of mixing could result in particle agglomeration and could produce a non-uniform coating layer which may be non-uniform in thickness and density.

The range of ceramic to polymeric binder content of the coatings described herein may preferably be varied from about 50-95% by weight ceramic and about 5-50% by weight PVDF (or polymer) in order to achieve adequate adhesion from the PVDF binder between ceramic particles, between the ceramic/PVDF coating and the separator substrate/membrane, and/or between the ceramic/PVDF coated separator and the electrodes of the lithium ion battery. Preferably, the optimal balance of ceramic particles and PVDF (or polymer) is that which provides good to excellent adhesion 1) between the ceramic particles, 2) between the ceramic/PVDF coating and the base separator or substrate (the porous membrane or film), and/or 3) between the ceramic/PVDF coated separator and one or both electrodes of the lithium ion battery. Balancing good to excellent adhesion for the three above-described "types" of adhesion may allow for the desired level of ion conductivity through the separator during the life of the lithium ion battery (and therefore may lead to a better overall performing battery). More preferred ranges of ceramic and PVDF (or polymer) in order to achieve the desired adhesion performance and high thermal stability in a lithium ion battery, as well as to provide an oxidation resistant barrier at the coating-electrode interface, may include about 50-95% by weight ceramic and about 5-50% PVDF (or polymer), or in some embodiments, about 60-90% by weight ceramic and about 10-40% PVDF (or polymer), or in some embodiments, about 70-90% by weight ceramic and about 10-30% PVDF (or polymer), or in still some embodiments, about 80-90% by weight ceramic and about 10-20% PVDF (or polymer).

Non-limiting examples of the base substrate porous and/or microporous membrane may include any commercially available single layer, bilayer, trilayer and/or multilayer (co-extruded or laminated) porous membranes manufactured by a dry process or by a wet process, both of which are commonly known by those skilled in the art. By way of example, the substrate may be a polymeric porous or microporous layer that may be adapted for blocking or shutting down ion conductivity or flow between the anode and the cathode of a lithium ion battery during the event of thermal runaway. Porous membranes useful as a substrate with the coatings described herein may include those commercially available membrane products from, for example but not limited to, Celgard, LLC of Charlotte, North Carolina, Asahi Kasei of Tokyo, Japan, and Tonen of Tokyo, Japan. The substrate may have a porosity in the range of about 20-80%, preferably in the range of about 28-60%, and may have an average pore size in the range of about 0.02 to about 2 microns, preferably in the range of about 0.03 to about 0.5 microns, and in some embodiments, in the range of about 0.08 to about 0.5 microns. The substrate also may have a Gurley Number in the range of about 5 to 300 seconds, preferably about 15 to about 150 seconds, more preferably about 20 to about 80 seconds, in some embodiments, about 30 to about 80 seconds, where this Gurley Number is an ASTM Gurley and refers to the time it takes for 10 cc of air at 12.2 inches of water to pass through one square inch of membrane. The substrate may be polyolefinic and include, for example, polyethylene, polypropylene, or combinations thereof, including homopolymers and/or copolymers of such polyolefin(s).

The preferred thickness of the ceramic/PVDF coating layer can range from about 2 to about 10 µm, more preferably between about 2 and about 8 µm, and most preferably between about 3 and about 5 µm. In certain embodiments, the coating layer is even thinner and is less than 2 microns in thickness. Possible methods of application of the ceramic/PVDF coating are Mayer rod, dip, gravure, slot die, printing, doctor blade application, and spray methods, these being non-limiting examples. The coating process may be conducted at room temperature or elevated temperature. The ASTM Gurley value of the improved coated separator described herein may, in some embodiments, be about 5 to 300 seconds, preferably about 15 to about 150 seconds, in some embodiments, less than about 75 seconds, in some embodiments, less than about 50 seconds, in some embodiments, less than about 40 seconds, in some embodiments, less than about 30 seconds, and in some embodiments, less than about 20 seconds. Additionally, in some embodiments, the Gurley testing for the coated separator may be performed using the JIS Gurley method described herein. In such embodiments, the JIS Gurley value for coated separators in accordance with the present invention may range according to the various Examples set forth herein, and in some particularly preferred embodiments, may be less than about 300 seconds, in others, less than about 250 seconds, in still others, less than about 200 seconds, in others, less than about 150 seconds, and in still others, less than about 125 seconds.

The coated substrate may be dried at room temperature in air and/or, depending on film speed through the drying oven, in an oven at a temperature of from about 40-100°C or at a temperature below the melt temperature of the base membrane. In certain embodiments, drying in an oven may be preferred, as the adhesion of the coating to the substrate may be improved upon drying in an oven versus drying in air at room temperature. The drying step in the coating application process may serve to evaporate much, or close to all, of the water originally present in the coating slurry containing ceramic particles, one or more water-insoluble polymers (such as PVDF homopolymer or copolymer) and, optionally, one or more water-soluble binders or polymers.

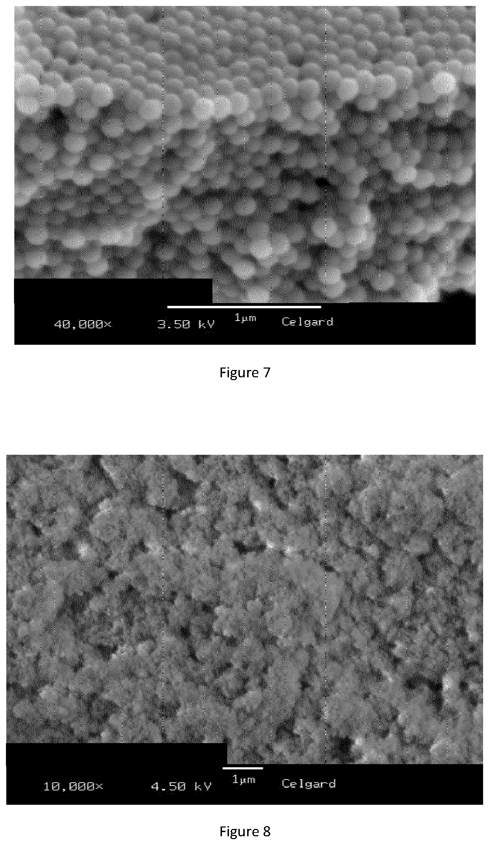

Not wishing to be bound by theory, it appears that in certain embodiments of the present invention, room temperature drying of the coating may result in the polymer particles (such as PVDF particles) simply appearing to reside on the surface of the porous substrate without providing excellent adhesion of the coating layer to the substrate. By way of example only, Figure 7 is an SEM, taken at a magnification of 40,000x, of a side view of what may be called "non-coalesced" or water-insoluble PVDF spherical nanoparticles or nanospheres (particles that may be, for example, 1/10 the particle size of the ceramic particles used in the inventive coatings) in a coating layer containing just the PVDF particles without ceramic particles, coated onto a substrate, and dried in air at room temperature. In Figure 7, the spherical PVDF particles appear to simply reside on the surface of the substrate without necessarily providing the desired adhesion of the coating layer to the substrate. In various embodiments, spherical or substantially spherical PVDF particles act as sort of a filler.

In some embodiments, upon drying the coated separator in an oven, at a temperature, for example, of about 50-60°C, the water-insoluble polymer particles (for example, lower melt temperature (<100 degrees C) PVDF nanoparticles or nanospheres) appear to somewhat "coalesce" or soften or melt, possibly increasing the resulting adhesion among or within the ceramic particles and the polymeric material, and/or the resulting adhesion of the ceramic/PVDF coating to the microporous base membrane, and/or the resulting adhesion of the coated separator to any battery electrode. This may simulate what happens to the PVDF spherical-type particles when such a coated separator is laminated to an electrode.

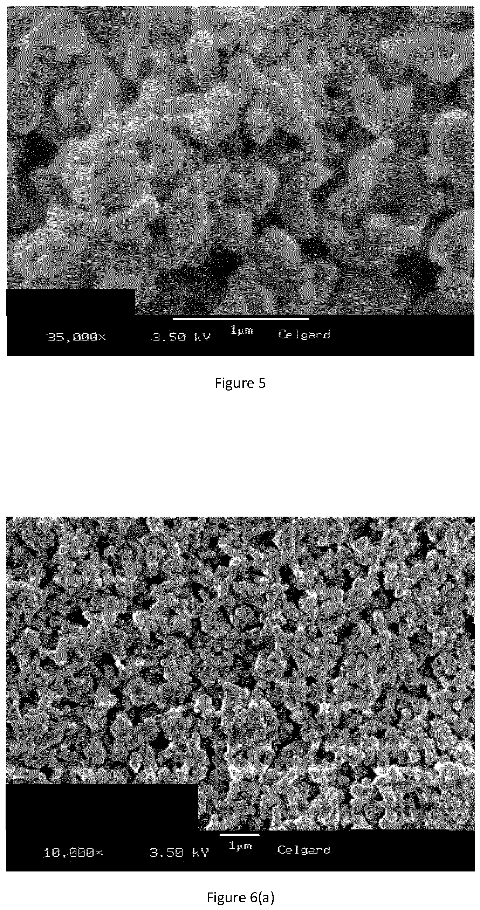

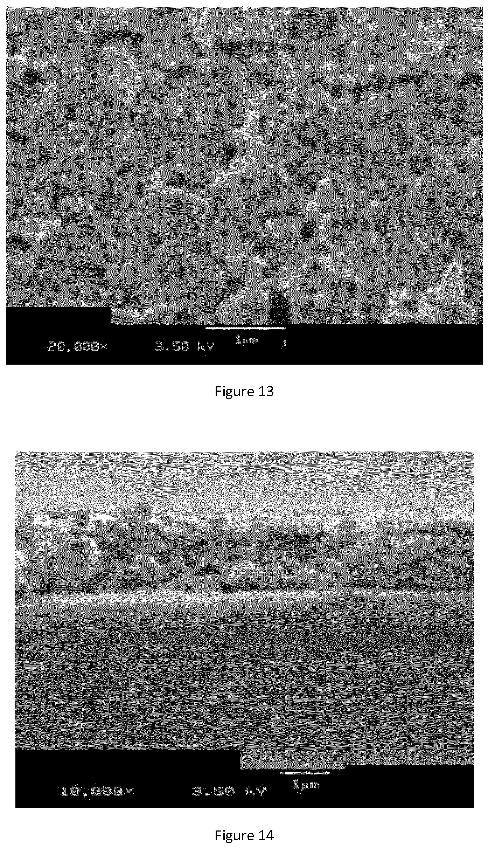

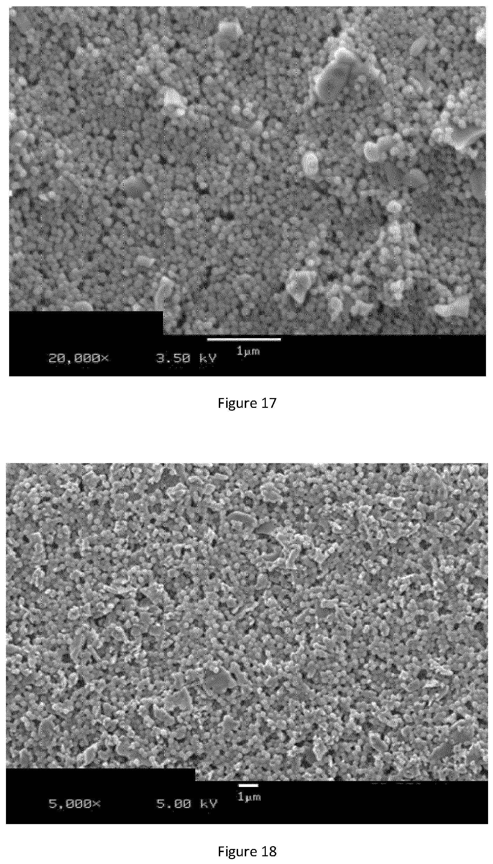

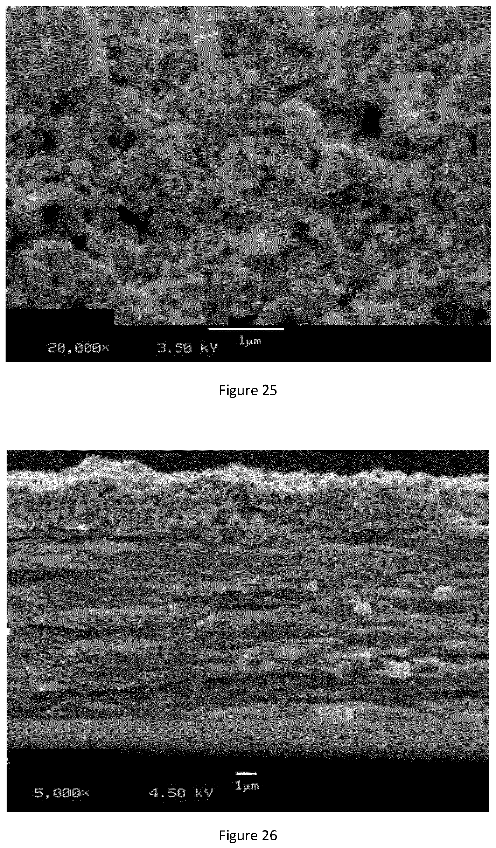

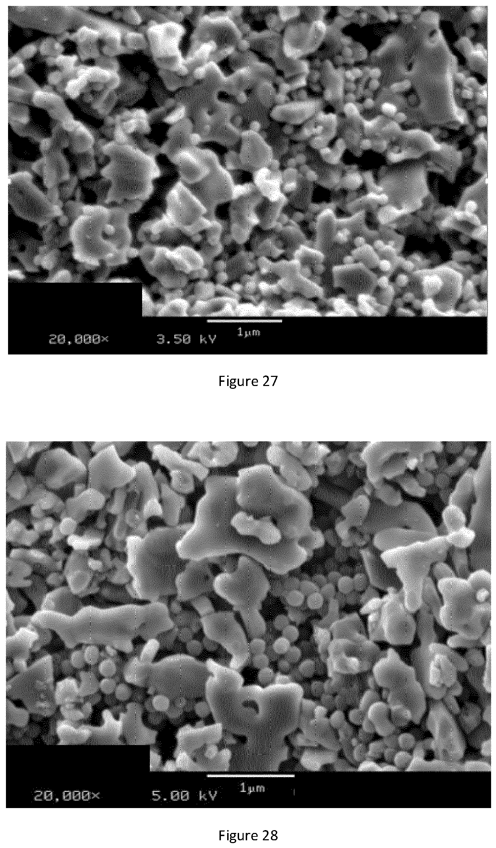

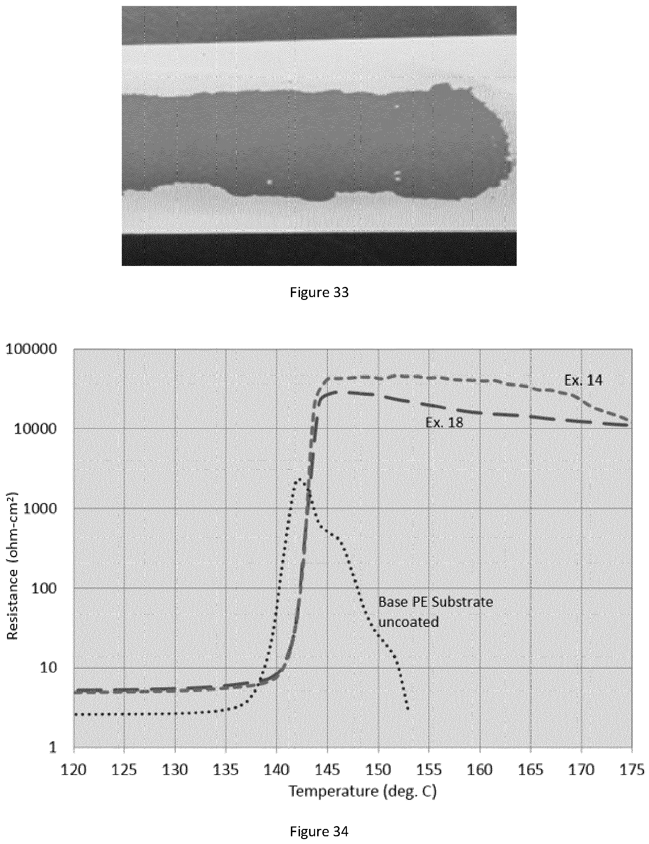

In some embodiments, the water-insoluble PVDF particles may remain spherical in shape after drying (for example, see Figures 5, 13, 17, 18, 25, 27, and 28) and upon lamination of the coated separator to an electrode, a process which is accompanied by heat and pressure, may contribute to the excellent adhesion of the inventive coated separator to the electrode. In some embodiments, the water-insoluble PVDF particles may swell in electrolyte and may enhance the adhesion of the coated separator membrane to an electrode. Figure 33 is a photograph of the inventive coated separator which had been laminated to an electrode and undergone a dry adhesion peel test where the coated separator was hand pulled apart from the electrode. The black areas on the surface of the coated separator may demonstrate a layer of the electrode adhered to the coated separator, indicating the excellent adhesion of the coating layer to the electrode.

Various embodiments of the invention have been described in fulfillment of the various objects of the invention. It should be recognized that these embodiments are merely illustrative of the principles of the present invention. Numerous modifications and adaptations will be readily apparent to those skilled in the art without departing from the spirit and scope of this invention.

In accordance with at least selected embodiments, aspects or objects, there are provided various new or improved coated separators, membranes, films, or the like for use in lithium batteries, such as lithium-ion batteries or lithium-ion polymer batteries, new or improved batteries including such coated separators, membranes, films, or the like, and methods of making or using such coated separators, membranes, films or the like; new or improved ceramic coated separators, membranes, films, or the like for use in lithium batteries, such as lithium-ion batteries or lithium-ion polymer batteries, new or improved batteries including such ceramic coated separators, membranes, films, or the like, and methods of making or using such ceramic coated separators, membranes, films or the like; new or improved aqueous or water-based polymeric coated separators, membranes, films, or the like for use in lithium batteries, such as lithium-ion batteries or lithium-ion polymer batteries, new or improved batteries including such aqueous or water-based polymeric coated separators, membranes, films, or the like, and methods of making or using such aqueous or water-based polymeric coated separators, membranes, films or the like; new or improved aqueous or water-based polyvinylidene fluoride (PVDF) polymeric coated separators, membranes, films, or the like for use in lithium batteries, such as lithium-ion batteries or lithium-ion polymer batteries, new or improved batteries including such aqueous or water-based polyvinylidene fluoride (PVDF) polymeric coated separators, membranes, films, or the like, and methods of making or using such aqueous or water-based polyvinylidene fluoride (PVDF) polymeric coated separators, membranes, films or the like, new or improved polyvinylidene fluoride or polyvinylidene difluoride (PVDF) homopolymer or co-polymers of PVDF with hexafluoropropylene (HFP or [-CF(CF₃)-CF₂-]), chlorotrifluoroethylene (CTFE), vinylidene fluoride (VF₂-HFP), tetrafluoroethylene (TFE), and/or the like, blends and/or mixtures thereof, coated separators, membranes, films or the like, new or improved porous separators for use in lithium batteries, new or improved coating or application methods for applying a coating or ceramic coating to a separator for use in a lithium battery, new or improved PVDF or PVDF:HFP films or membranes, and/or the like.

### EXAMPLES

In the following Examples, various coated separators for use in a lithium ion battery were formed and tested.

### Example 1

An aqueous-based PVDF/ceramic coating slurry was prepared by uniformly dispersing 25 grams of high purity alumina particles having a D50 average particle diameter of 0.65 µm, a bulk tapped density of 0.8 g/cm³ and a BET surface area of 4.6 m²/g with 18.7 grams of Formulation #1, a 50:50 blend of Formulation #2 and Formulation #3, two aqueous solutions or suspensions of PVDF:HFP (available from Arkema Inc. of King of Prussia, Pennsylvania, under the product line Kynar® Latex) which differ by content of HFP and are described in more detail below. Improved mixing was achieved by first pre-wetting the alumina particles with the Formulation #1 solution or suspension. Dispersion was accomplished using a Silverson High Shear L4M-5 mixer at 5000 rpm for 12 minutes at room temperature. The slurry was applied to the surface of a Celgard®2400 PP microporous membrane (a membrane made by a dry process, also known as the Celgard® process and having a thickness of about 25 µm, a porosity of about 41%, a pore size of about 0.04 µm, and a JIS Gurley value of about 620 sec, which is equivalent to an ASTM Gurley value of about 25 sec) by hand coating using a doctor blade. The coated sample was allowed to dry in air at room temperature.

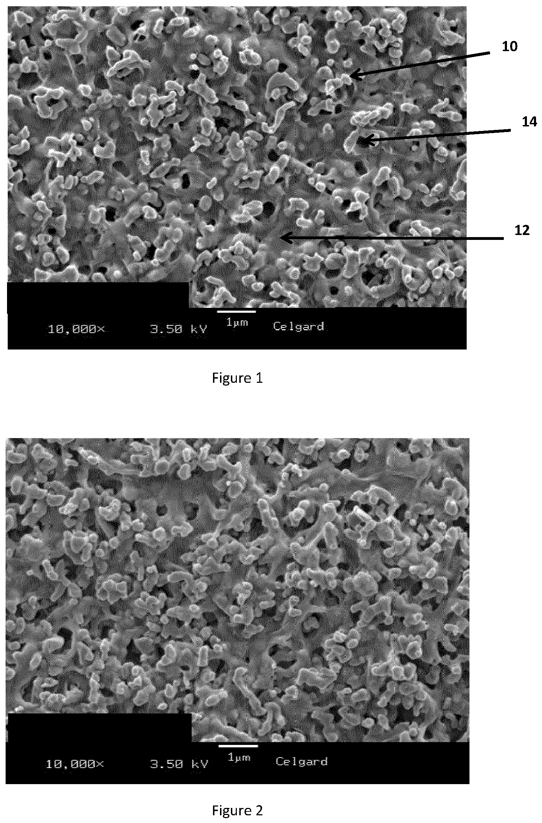

A scanning electron micrograph (SEM) of the surface of this coated separator membrane, taken at 10,000x magnification, is shown in Figure 1. Irregularly shaped ceramic particles 10 can be seen in the SEM of Figure 1 as well as PVDF binder 12, which has been coalesced or somewhat melted or bound together to form the coating layer with the ceramic particles 10. Additionally, voids 14 can be seen in the SEM of Figure 1.

Components of the coating prepared in this Example are shown below in Table 1, while properties of the coated separator membrane are reported in Table 2 below.

### Example 2

An aqueous-based PVDF/ceramic coating slurry was prepared by dispersing 39 grams of high purity alumina particles having a D50 average particle diameter of 0.65 µm, a bulk tapped density of 0.8 g/cm³ and a BET surface area of 4.6 m²/g with 16.8 grams of the PVDF Formulation #1 blend described in Example 1 above. Improved mixing was achieved by first pre-wetting the alumina particles with the Formulation #1 solution or suspension. Dispersion was accomplished using a Silverson High Shear L4M-5 mixer at 5000 rpm for 12 minutes at room temperature and then using a Ball mill mixer (MTI Shimmy Ball Mixer) for 20 minutes. The ceramic/PVDF slurry was hand coated on a surface of a Celgard®2400 PP microporous membrane (the features of which membrane are described in Example 1 above) using a doctor blade, and the water was removed by oven drying at 79°C. An SEM of the surface of this coated separator membrane, taken at 10,000x magnification, is shown in Figure 2. Components of the coating formed during this Example are shown below in Table 1, while properties of the coated separator membrane are reported in Table 2 below.

### Example 3

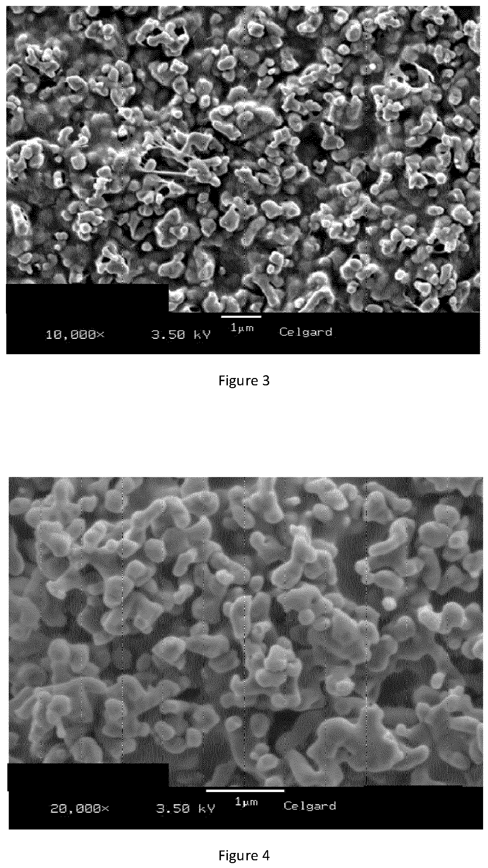

An aqueous-based PVDF/ceramic coating slurry was prepared by mixing and uniformly dispersing 66 grams of high purity alumina particles having a D50 average particle diameter of 0.65 µm, a bulk tapped density of 0.8 g/cm³ and a BET surface area of 4.6 m²/g with 23.5 grams of Formulation #2, a Kynar® Latex product available from Arkema and generally described as an aqueous suspension of water (55-65%) and PVDF:HFP, which PVDF:HFP has a melt temperature in the range of about 114-120°C. Improved mixing was achieved by first pre-wetting the alumina particles with the Formulation #2 solution or suspension. Dispersion was accomplished using a Silverson High Shear L4M-5 mixer at 3000 rpm for 5 minutes at room temperature followed by mixing in Ball mill mixer (MTI Shimmy Ball Mixer) for 20 minutes. The slurry was hand coated onto the surface of a Celgard®EK0940 polyethylene microporous membrane (a membrane made from a wet process and having a thickness of about 9 µm, a porosity of about 40%, a JIS Gurley value of about 130 sec, which is equivalent to an ASTM Gurley value of about 5 sec) using a doctor blade, and the coated sample was oven dried at 65°C. An SEM of the surface of this coated separator membrane, taken at 10,000x magnification, is shown in Figure 3. Components of the coating prepared in this Example are shown below in Table 1, while properties of the coated separator membrane are reported in Table 2 below.

### Example 4

An aqueous-based PVDF/ceramic coating slurry was prepared by mixing and uniformly dispersing 66 grams of high purity alumina particles having a D50 average particle diameter of 0.65 µm, a bulk tapped density of 0.8 g/cm³ and a BET surface area of 4.6 m²/g with 16.4 grams of Formulation #2 (described above). Improved mixing was achieved by first pre-wetting the alumina particles with the Formulation #2 solution or suspension. Dispersion was accomplished using a Silverson High Shear L4M-5 mixer at 5000 rpm for 10 minutes at room temperature followed by mixing in Ball mill mixer (MTI Shimmy Ball Mixer) for 15 minutes. The slurry was applied to the surface of a Celgard®EK0940 polyethylene microporous membrane (as described above in Example 3) by hand coating using a Mayer rod size 3, and the coated sample was oven dried at 60°C. Components of the coating formed during this Example are shown below in Table 1, while properties of the coated separator membrane are reported in Table 2 below.

### Example 5

The aqueous-based PVDF/ceramic coating slurry used in Example 4 was used to coat a Celgard®EK0940 polyethylene microporous membrane using a Mayer rod size 24, and the coated sample was oven dried at 60°C. Components of the coating formed for this Example are shown below in Table 1, while properties of the coated separator membrane are reported in Table 2 below.

### Example 6

The aqueous-based PVDF/ceramic coating slurry used in Example 4 was used to coat a Celgard®2400 polypropylene microporous membrane using a doctor blade, and the coated sample was oven dried at 60°C. An SEM of the surface of this coated separator membrane, taken at 20,000x magnification, is shown in Figure 4. Components of the coating formed for this Example are shown below in Table 1, while properties of the coated separator membrane are reported in Table 2 below.

### Example 7

An aqueous-based PVDF/ceramic coating slurry was prepared by uniformly dispersing 138 grams of high purity alumina particles having a D50 average particle diameter of 0.65 µm, a bulk tapped density of 0.8 g/cm³ and a BET surface area of 4.6 m²/g with 30 grams of Formulation #3, a Kynar® Latex product available from Arkema and generally described as an aqueous suspension of water (55-65%) and PVDF:HFP, whichPVDF:HFP has a melt temperature in the range of about 152-155°C. Improved mixing was achieved by first pre-wetting the alumina particles with the Formulation #3 solution or suspension. The lower content of HFP copolymer in the PVDF:HFP in Formulation #3 may account for the higher melt temperature of the PVDF:HFP in Formulation #3 compared with that of the PVDF:HFP in Formulation #2. Not wishing to be bound by theory, the varying amounts of copolymer (for example, HFP in a PVDF:HFP copolymer) may affect adhesion of the polymer solution or suspension to the ceramic particles and overall adhesion of the coating to the membrane and ultimately the adhesion between the coated separator and one or both electrodes of the lithium ion battery. Using too much or too little copolymer (such as HFP) could affect the crystallinity of the coating and could affect the tackiness of the coating, thereby affecting the adhesion of the coating.

Dispersion was accomplished using a Silverson High Shear L4M-5 mixer at 5000 rpm for 5 minutes and at 6700 rpm for 10 minutes at room temperature. The slurry was applied to the surface of a Celgard®EK0940 polyethylene microporous membrane by hand coating using a Mayer rod size 24. The coated sample was dried in the oven at 60°C for 10 minutes and further allowed to dry in air at room temperature. An SEM of the surface of this coated separator membrane, taken at 35,000x magnification, is shown in Figure 5. Components of the coating of this Example are shown below in Table 1, while properties of the coated separator membrane are reported in Table 2 below.

### Example 8

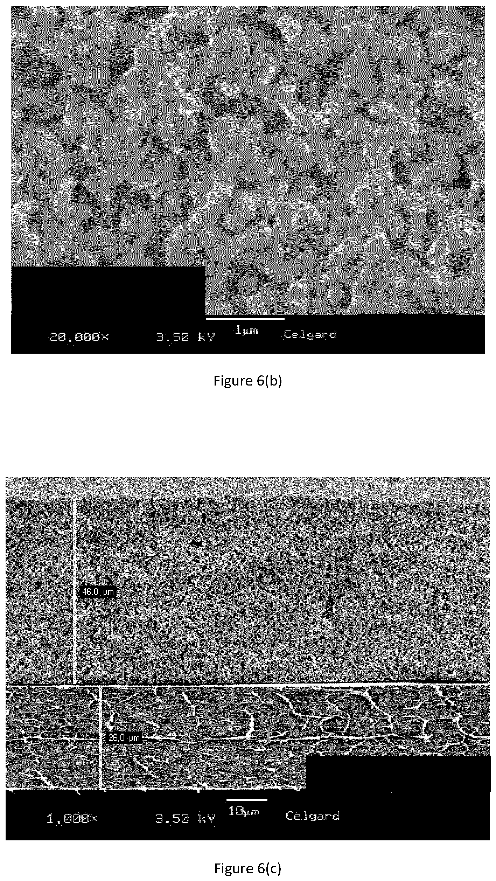

An aqueous-based PVDF/ceramic coating slurry was prepared by mixing and uniformly dispersing 112 grams of high purity alumina particles having a D50 average particle diameter of 0.65 µm, a bulk tapped density of 0.8 g/cm³ and a BET surface area of 4.6 m²/g with 18.7 grams of the Formulation #1 blend described in Example 1 above. Improved mixing was achieved by first pre-wetting the alumina particles with the Formulation #1 solution or suspension. Dispersion was accomplished using a Silverson High Shear L4M-5 mixer at 2500 rpm for 10 minutes and 5000 rpm for 10 minutes at room temperature followed by mixing in Ball mill mixer (MTI Shimmy Ball Mixer) for 10 minutes. The slurry was applied to the surface of a Celgard®2400 polypropylene microporous membrane by hand coating using a doctor blade, and the coated sample was oven dried at 60°C. Two SEMs of the surface of this coated separator membrane are shown in Figures 6(a) (10,000x magnification) and 6(b) (20,000x magnification), and an SEM of the cross section of this coated separator membrane, taken at 1,000x magnification, is shown in Figure 6(c). Components of the coating for this Example are shown below in Table 1, while properties of the coated separator membrane are reported in Table 2 below.

### Comparative Example 1

A non-aqueous based PVDF ceramic coating solution was prepared by mixing 30 grams of high purity fumed alumina particles having an average diameter of 100 nm with 30 grams of Solef 21216 PVDF:HFP (commercially available from Solvay) in acetone. The coating was hand coated using a doctor blade onto a Celgard®EK0940 polyethylene microporous membrane and allowed to dry in air at room temperature. An SEM of the surface of this coated separator membrane, taken at 10,000x magnification, is shown in Figure 8. Components of the coating of this Comparative Example are shown below in Table 1, while properties of the coated separator membrane are reported in Table 2.

**Table 1**

| Example Number | Ceramic/ PVDF:HFP Ratio | Weight of Al₂O₃ (g) | Type of Al₂O₃ | Weight of PVDF: HFP (g) | Type of PVDF:HFP |
|---|---|---|---|---|---|
| 1 | 1.3:1 | 25 | Average particle diameter of 0.65 µm | 18.7 | Aqueous Formulation #1 |
| 2 | 2.3:1 | 39 | Average particle diameter of 0.65 µm | 16.8 | Aqueous Formulation #1 |
| 3 | 2.8:1 | 66 | Average particle diameter of 0.65 µm | 23.5 | Aqueous Formulation #2 |
| 4 | 4:1 | 66 | Average particle diameter of 0.65 µm | 16.4 | Aqueous Formulation #2 |
| 5 | 4:1 | 66 | Average particle diameter of 0.65 µm | 16.4 | Aqueous Formulation #2 |
| 6 | 4:1 | 66 | Average particle diameter of 0.65 µm | 16.4 | Aqueous Formulation #2 |
| 7 | 4.6:1 | 138 | Average particle diameter of 0.65 µm | 30.0 | Aqueous Formulation # 3 |
| 8 | 6:1 | 112 | Average particle diameter of 0.65 µm | 18.7 | Aqueous Formulation #1 |
| CE1 | 1:1 | 30 | Average particle diameter of 0.10 µm | 30 | Non-Aqueous Solef 21216 |

**Table 2**

| Example Number | Ceramic/ PVDF:HFP Ratio | Base Film/Substrate | Thickness of coating layer, µm | ASTM Gurley, sec | Adhesion to base film tested by rubbing finger |
|---|---|---|---|---|---|
| 1 | 1.3:1 | Celgard®2400 PP | 59 | Not tested | good |
| 2 | 2.3:1 | Celgard®2400 PP | 42 | 4 | good |
| 3 | 2.8:1 | Celgard®EK0940 PE | 70 | 135 | excellent |
| 4 | 4:1 | Celgard®EK0940 PE | 1.4 | 11 | excellent |
| 5 | 4:1 | Celgard®EK0940 PE | 13 | 267 | excellent |
| 6 | 4:1 | Celgard®2400 PP | 24 | > 200 | excellent |
| 7 | 4.6:1 | Celgard®EK0940 PE | 13 | > 200 | good |
| 8 | 6:1 | Celgard®2400 PP | 45 | 69 | excellent |
| CE1 | 1:1 | Celgard®EK0940 PE | 38 | 50 | excellent |

The coated separator membranes in Examples 1-8, useful in a rechargeable lithium ion battery, were coated with ceramic particles and an aqueous or water based polymeric binder. Table 1 above listed the formulation information related to the composition of Examples 1-8, which have a range of ceramic/PVDF:HFP ratio from about 1:1 to about 6:1. Examples 1-8 were coated using a water or aqueous based coating which does not contain any non-aqueous solvents such as acetone, N-methyl pyrrolidone, dimethyl acetamide, or the like. Comparative Example 1 (CE1), which has a ceramic/PVDF:HFP ratio of 1:1, was coated using acetone as the primary solvent.

Table 2 above listed the coating layer thickness, Gurley and adhesion performance data for the coated samples of Examples 1-8 and Comparative Example CE1. Various coatings in the Examples are porous, as indicated by the samples having a Gurley value and also by the presence of voids in the surface of the coated samples shown in the SEMs of Figures 1-6. The internal structure of the ceramic/PVDF coating layer is shown in Figure 6(c), which shows a cross sectional view of the coated separator.

Various coatings in the Examples were observed to have good to excellent adhesion between the ceramic particles and between the coating layer and the base membrane or substrate, demonstrating that the aqueous-based coating system provided the necessary adhesion performance without the presence of a non-aqueous solvent in the coating formulation.

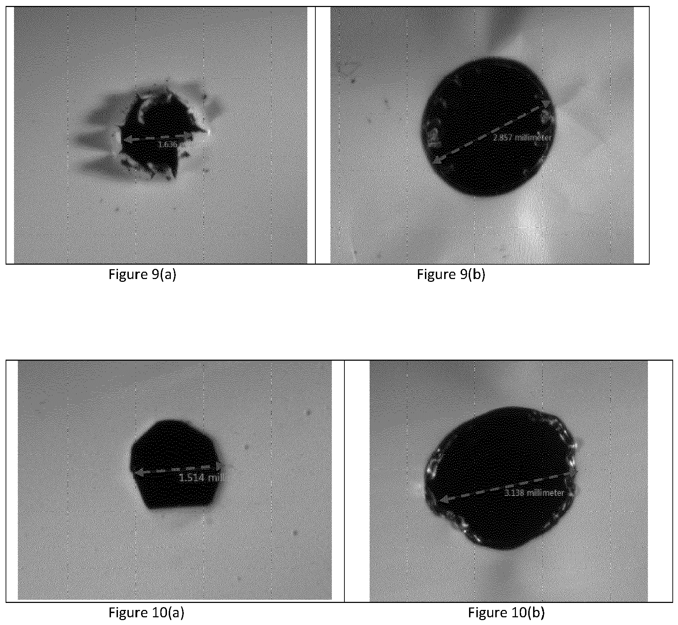

Various ceramic/PVDF:HFP coated samples from the Examples also showed improved thermal stability as indicated by the improvement in hot tip hole propagation test results listed in Table 3 below. Improvement in the size of the hole propagation was observed regardless of whether the base membrane was PE or PP. Figures 9, 10 and 11 are photos taken using an optical microscope of the shape and the size of the hole after the hot tip probe is removed. These photos provided evidence of the improved response by the ceramic/PVDF:HFP coating to contact with very high heat.

In Figure 9(b), a "control" sample of uncoated Celgard®EK0940 polyethylene membrane was tested for hot tip hole propagation, and in Figure 9(a), the coated sample of Example 3 (for which the coating had a ratio of about 2.8:1 ceramic to PVDF:HFP) was tested for hot tip hole propagation. A more than 40% reduction in hole propagation was observed for the sample of Example 3, as shown in Table 3 below.

In Figure 10(b), a "control" sample of uncoated Celgard®2400 polypropylene membrane was tested for hot tip hole propagation, and in Figure 10(a), the coated sample of Example 6 (for which the coating had a ratio of about 4:1 ceramic to PVDF:HFP) was tested for hot tip hole propagation. A more than 50% reduction in hole propagation was observed for the sample of Example 6, as shown in Table 3 below.

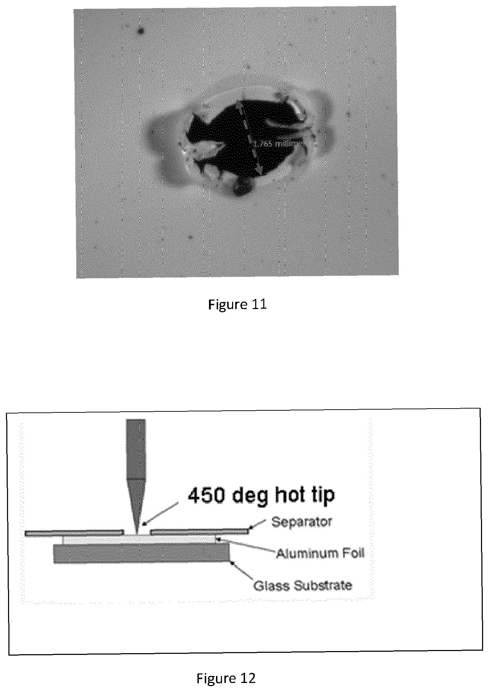

In Figure 11, the coated sample of Example 8 (for which the coating had a ratio of about 6:1 ceramic to PVDF:HFP) was tested for hot tip hole propagation. A more than 40% reduction in hole propagation was observed for the sample of Example 8, compared with the hole propagation for the control sample tested in Figure 10(b), as shown in Table 3 below.

**Table 3**

| | Average Hole Size, mm | % Reduction | Patent Figure # |
|---|---|---|---|
| Celgard®EK0940 PE | 2.857 | (Control Sample) | Figure 9(b) |
| Example 3 | 1.636 | 43 | Figure 9(a) |
| Celgard®2400 PP | 3.138 | (Control Sample) | Figure 10(b) |
| Example 6 | 1.514 | 52 | Figure 10(a) |
| Example 8 | 1.765 | 44 | Figure 11 |

The improvement in thermal stability provided by the ceramic/PVDF:HFP coating in the hot tip test simulates the response of the coated separators described herein if an internal short occurs in a lithium ion battery. The separators described herein maintain their thermal integrity and continue to provide a physical barrier separating the electrodes and increasing battery cycle life.

The following examples, Examples 9-18 were prepared by 1) mixing aluminum oxide (Al₂O₃) ceramic particles with neutralized polyacrylic acid (PAA) in a ball mill mixer, 2) adding one or more water-soluble binders (such as polyacrylates) into the mixed Al₂O₃-dispersant mixture, followed by the addition of an aqueous PVDF solution or suspension to form a uniform, well-mixed slurry.

### Example 9

Example 9 is a PP/PE/PP trilayer microporous base membrane having an uncoated thickness of 12.3 µm, which is single-side coated with an aqueous coating formulation having a 50:50 weight percent ratio of polyvinylidene fluoride (PVDF) polymer to aluminum oxide (Al₂O₃) ceramic particles. The coating formulation contains a PVDF with a molecular weight > 300,000. The thickness of the coating layer is 3.4 µm.

### Example 10

Example 10 is a PP/PE/PP trilayer microporous base membrane having an uncoated thickness of 12.3 µm, which is single-side coated with an aqueous coating formulation having a 50:50 weight percent ratio of polyvinylidene fluoride (PVDF) polymer to aluminum oxide (Al₂O₃) ceramic particles. The coating formulation contains a PVDF with a molecular weight > 1,000,000. The thickness of the coating layer is 4.0 µm.

### Example 11

Example 11 is a PP/PE/PP trilayer microporous base membrane having an uncoated thickness of 17.8 µm, which is single-side coated with an aqueous coating formulation having a 50:50 weight percent ratio of polyvinylidene fluoride (PVDF) polymer to aluminum oxide (Al₂O₃) ceramic particles. The coating formulation contains a PVDF with a molecular weight > 1,000,000. The thickness of the coating layer is 2.8 µm.

### Example 12

Example 12 is a PP/PE/PP trilayer microporous base membrane having an uncoated thickness of 17.8 µm, which is single-side coated with an aqueous coating formulation having a 50:50 weight percent ratio of polyvinylidene fluoride (PVDF) polymer to aluminum oxide (Al₂O₃) ceramic particles. The coating formulation contains a PVDF with a molecular weight > 300,000. The thickness of the coating layer is 2.1 µm.

### Example 13

Example 13 is a PP/PE/PP trilayer microporous base membrane having an uncoated thickness of 17.8 µm, which is single-side coated with an aqueous coating formulation having a 50:50 weight percent ratio of polyvinylidene fluoride (PVDF) polymer to aluminum oxide (Al₂O₃) ceramic particles. The coating formulation contains a PVDF with a molecular weight > 300,000. The thickness of the coating layer is 1.0 µm.

Table 4 below lists separator property data for Examples 9-13, all of which were coated at a binder:ceramic ratio of 50:50. The Al₂O₃ ceramic particles in the PVDF - Al₂O₃ aqueous slurry are 0.5 µm in diameter and have a particle size distribution of D50. The PVDF particle size is 100 nm to 1,000 nm.

**Table 4**

| | Ex. 9 | Ex. 10 | Ex.11 | Ex. 12 | Ex. 13 |
|---|---|---|---|---|---|
| Ceramic | Al₂O₃ | Al₂O₃ | Al₂O₃ | Al₂O₃ | Al₂O₃ |
| Molecular weight PVDF | > 300,000 | > 1,000,000 | > 1,000,000 | >300,000 | > 300,000 |
| PVDF Melt Temperature, deg C | 135 | 144-145 | 144-145 | 140 | 60 |
| PVDF: ceramic ratio | 50:50 | 50:50 | 50:50 | 50:50 | 50:50 |
| Soluble binder: insoluble binder ratio | 1:10 | 1:10 | 1:10 | 1:10 | 1:10 |
| Base film thickness, µm | 12.3 | 12.3 | 17.8 | 17.8 | 17.8 |
| Total coated thickness, µm | 15.7 | 16.3 | 20.6 | 19.9 | 18.8 |
| Coating thickness, µm | 3.4 | 4.0 | 2.8 | 2.1 | 1.0 |
| Basis Weight of Coating, mg/cm² | 1.1 | 0.9 | 1.4 | 1.2 | 1.1 |
| JIS Gurley, s | 299 | 404 | 529 | 442 | 612 |
| % MD Shrinkage 130 deg C 1 hour | > 30% | > 30% | > 30% | > 30% | > 30% |
| % TD Shrinkage 130 deg C 1 hour | > 10% | > 10% | > 10% | > 10% | > 10% |

### Example 14

Example 14 is a PE microporous base membrane having an uncoated thickness of 9 µm, which is single-side coated with an aqueous coating formulation having a 20:80 weight percent ratio of polyvinylidene fluoride (PVDF) polymer to aluminum oxide (Al₂O₃) ceramic particles. The coating formulation contains a PVDF with a molecular weight > 300,000. The thickness of the coating layer is 4.2 µm.

### Example 15

Example 15 is a PE microporous base membrane having an uncoated thickness of 9 µm, which is single-side coated with an aqueous coating formulation having a 20:80 weight percent ratio of polyvinylidene fluoride (PVDF) polymer to aluminum oxide (Al₂O₃) ceramic particles. The thickness of the coating layer is 3.5 µm.

### Example 16

Example 16 is a PE microporous base membrane having an uncoated thickness of 9 µm, which is single-side coated with an aqueous coating formulation having a 20:80 weight percent ratio of polyvinylidene fluoride (PVDF) polymer to aluminum oxide (Al₂O₃) ceramic particles. The thickness of the coating layer is 5.0 µm.

### Example 17

Example 17 is a PE microporous base membrane having an uncoated thickness of 9 µm, which is single-side coated with an aqueous coating formulation having a 20:80 weight percent ratio of polyvinylidene fluoride (PVDF) polymer to aluminum oxide (Al₂O₃) ceramic particles. The coating formulation contains a PVDF with a molecular weight > 300,000. The thickness of the coating layer is 5.6 µm.

Table 5 below lists separator property data for Examples 14-17, all of which were coated at a binder:ceramic ratio of 20:80. The Al₂O₃ ceramic particles in the PVDF - Al₂O₃ aqueous slurry are 0. 5 µm in diameter and have a particle size distribution of D50. The PVDF particle size is 100 nm to 1,000 nm.

**Table 5**

| | Ex. 14 | Ex. 15 | Ex. 16 | Ex.17 |
|---|---|---|---|---|
| Ceramic | Al₂O₃ | Al₂O₃ | Al₂O₃ | Al₂O₃ |
| Molecular weight PVDF | >300,000 | na | na | > 300,000 |
| PVDF Melt Temperature, deg C | 60 | 148-155 | 110 | 140-150 |
| PVDF:ceramic ratio | 20:80 | 20:80 | 20:80 | 20:80 |
| Soluble binder: insoluble binder ratio | 1:10 | 1:10 | 1:10 | 1:10 |
| Base film thickness, µm | 9 um wet PE | 9 um wet PE | 9 um wet PE | 9 um wet PE |
| Total coated thickness, µm | 13.2 | 12.5 | 14 | 14.6 |
| Coating thickness, µm | 4.2 | 3.5 | 5.0 | 5.6 |
| Basis Weight of coating, mg/cm² | 1.1 | 0.9 | 1.0 | 0.9 |
| JIS Gurley, s | 185 | 127 | 125 | 141 |
| % MD Shrinkage 130 deg C 1 hour | 2.2 | 8.4 | 11.4 | 9.5 |
| % TD Shrinkage 130 deg C 1 hour | 3.0 | 5.5 | 7.0 | 6.7 |

### Example 18

Example 18 is a PE microporous base membrane having an uncoated thickness of 9 µm, which is single-side coated with an aqueous coating formulation having a 10:90 weight percent ratio of polyvinylidene fluoride (PVDF) polymer to aluminum oxide (Al₂O₃) ceramic particles. The thickness of the coating layer is 6.9 µm.

Table 6 below lists separator property data for the separators of Examples 13 and 14 (repeating data from Tables 4 and 5 above) as well as the separator of Example 18, which are coated at PVDF binder:ceramic ratios of 50:50, 20:80 and 10:90, respectively. The Al₂O₃ ceramic particles in the PVDF - Al₂O₃ aqueous slurry are 0.5 µm in diameter and have a particle size distribution of D50. The PVDF particle size is 100 nm to 1,000 nm.

**Table 6**

| | Ex. 13 | Ex. 14 | Ex. 18 |
|---|---|---|---|
| Ceramic | Al₂O₃ | Al₂O₃ | Al₂O₃ |
| Molecular weight PVDF | > 300,000 | > 300,000 | > 300,000 |
| PVDF Melt Temperature, deg C | 60 | 60 | 60 |
| PVDF: ceramic ratio | 50:50 | 20:80 | 10:90 |
| Soluble binder: insoluble binder ratio | 1:10 | 1:10 | 1:10 |
| Base film thickness, µm | 17.8 PP/PE/PP | 9 um wet PE | 9 um wet PE |
| Total coated thickness, µm | 18.8 | 13.2 | 15.9 |
| Coating thickness, µm | 1.0 | 4.2 | 6.9 |
| Basis Weight of coating, mg/cm² | 1.1 | 1.1 | 1.1 |
| JIS Gurley, s | 612 | 185 | 144 |
| % MD Shrinkage 130 deg C 1 hour | > 30% | 2.2% | 1.3% |
| % TD Shrinkage 130 deg C 1 hour | > 10% | 3.0% | 2.4% |

The ratio of polymer to ceramic content may be selected to balance excellent adhesion of the polymer-ceramic coating to an electrode where the adhesion may be attributed to the swelling of the water-insoluble binder in electrolyte and/or to the melting of the PVDF when the PVDF has a low melt temperature of < 100 deg C, more preferably < 80 deg C and most preferably ≤ 60 deg C. In addition, the ratio of polymer to ceramic content may be selected to optimize and/or to reduce thermal shrinkage of the polymer-ceramic coated separator. The 20:80 water-insoluble polymer binder:ceramic ratio in Examples 14, 15, 16 and 17 may demonstrate a low Machine direction (MD) thermal shrinkage ≤ 11.4% and a low Transverse (TD) thermal shrinkage ≤ 7%. Furthermore, the 10:90 water-insoluble polymer binder:ceramic ratio in Example 18 may demonstrate a low Machine direction (MD) thermal shrinkage ≤ 1.3% and a low Transverse (TD) thermal shrinkage ≤ 2.4%.

The ratio of water-soluble to water-insoluble binder content may be selected to optimize the adhesion of the polymer-ceramic coating to a base separator. A ratio of 1:20 water-soluble binder(s) to water-insoluble binder(s), more preferably a ratio of 1:15, and most preferably 1:10, in order to promote excellent adhesion of the polymer ceramic coating to the base separator substrate and for excellent adhesion of the ceramic particles within the polymer-ceramic coating layer to eliminate shedding or loss of any ceramic particles during handling of the separator during manufacture or battery cell winding.

Various new or improved coated separators, membranes, films, or the like for use in lithium batteries, such as lithium ion batteries or lithium ion polymer batteries, new or improved batteries including such coated separators, membranes, films, or the like, and methods of making or using such coated separators, membranes, films or the like are disclosed herein. In accordance with at least selected embodiments, aspects or objects, new or improved ceramic coated separators, membranes, films, or the like for use in lithium batteries, such as lithium ion batteries or lithium ion polymer batteries, new or improved batteries including such ceramic coated separators, membranes, films, or the like, and methods of making or using such ceramic coated separators, membranes, films or the like are disclosed herein. In accordance with at least certain embodiments, aspects or objects, new or improved aqueous or water-based polymeric coated separators, membranes, films, or the like for use in lithium batteries, such as lithium ion batteries or lithium ion polymer batteries, new or improved batteries including such aqueous or water-based polymeric coated separators, membranes, films, or the like, and methods of making or using such aqueous or water-based polymeric coated separators, membranes, films or the like are disclosed herein. In accordance with at least particular embodiments, aspects or objects, new or improved aqueous or water-based polyvinylidene fluoride (PVDF) polymeric coated separators, membranes, films, or the like for use in lithium batteries, such as lithium ion batteries or lithium ion polymer batteries, new or improved batteries including such aqueous or water-based polyvinylidene fluoride (PVDF) polymeric coated separators, membranes, films, or the like, and methods of making or using such aqueous or water-based polyvinylidene fluoride (PVDF) polymeric coated separators, membranes, films or the like, new or improved polyvinylidene fluoride or polyvinylidene difluoride (PVDF) homopolymer or copolymers of PVDF and/or vinylidene fluoride (VF₂) with hexafluoropropylene (HFP or [-CF(CF₃)-CF₂-]), chlorotrifluoroethylene (CTFE), tetrafluoroethylene (TFE), and/or the like, blends and/or mixtures thereof, coated separators, membranes, films or the like, new or improved porous separators for use in lithium batteries, new or improved coating or application methods for applying a coating or ceramic coating to a separator for use in a lithium battery, new or improved PVDF or PVDF:HFP films or membranes, and/or the like are disclosed herein.

Also disclosed is a separator membrane for a lithium ion battery, which separator membrane has a porous coating layer formed on at least one surface of a porous substrate. The coating layer may be formed from a coating slurry that includes a mixture of water, ceramic particles, one or more water-insoluble polymers or binders, and, in some embodiments, one or more water-soluble polymers or binders. The present invention further provides a process for producing a separator membrane for a lithium ion battery where a porous coating layer, which may be formed from a coating slurry that includes the mixture described just above is formed on at least one surface of a porous substrate. This improved, new or modified separator may be advantageous because of its high temperature melt integrity and improved safety performance when used in a lithium ion battery. The ceramic/polymer coating layer may prevent oxidation from occurring at the interface of the coated separator and the electrodes of a lithium ion battery and may improve the safety and the overall performance of a lithium ion battery.

### TEST METHODS

### Gurley ASTM-D726(B) Test

Gurley is a resistance to air flow measured by the Gurley densometer (e.g., Model 4120). ASTM Gurley is the time in seconds required to pass 10 cc of air through one square inch of product under a pressure of 12.2 inches of water.

### Gurley JIS P8117 Test

JIS Gurley is defined as the Japanese Industrial Standard (JIS Gurley) JIS P8117 and is an air permeability test measured using the OHKEN permeability tester. JIS Gurley is the time in seconds required for 100 cc of air to pass through one square inch of film at constant pressure of 4.8 inches of water.

### Thickness Test

Thickness is measured using the Emveco Microgage 210-A precision micrometer thickness tester according to test procedure ASTM D374. Thickness values are reported in units of micrometers, µm.

### Basis Weight

A calibrated metal template is used to cut a test sample 1 ft² in area (and converted to cm²). The sample is weighed and basis weight in mg/cm² is calculated.

### Thermal Shrinkage:

Shrinkage is measured by placing a coated test sample between two sheets of paper which is then clipped together to hold the sample between the papers and suspended in an oven. For the '130°C for 1 hour' testing, a sample is placed in an oven at 130°C for 1 hour. After the designated heating time in the oven, each sample was removed and taped to a flat counter surface using single side sticky tape to flatten and smooth out the sample for accurate length and width measurement. Shrinkage is measured in the both the Machine direction (MD) and Transverse direction (TD) direction and is expressed as a % MD shrinkage and % TD shrinkage

### Hot Electrical Resistance (Hot ER):

Hot Electrical Resistance is a measure of resistance of a separator film while the temperature is linearly increased. The rise in resistance measured as impedance corresponds to a collapse in pore structure due to melting or "shutdown" of the separator membrane. The drop in resistance corresponds to opening of the separator due to coalescence of the polymer; this phenomenon is referred to as a loss in "melt integrity". When a separator membrane has sustained high level of electrical resistance, this is indicative that the separator membrane may prevent shorting in a battery.

### Adhesion Test

Adhesion of a coating to a base substrate can be subjectively evaluated by any or all of the following methods listed in order of increasing durability or adhesive strength of coating layer to base substrate, 1) rubbing the surface of the coating with a tip of the tester's index finger to see if the coating rubs off the underlying substrate, 2) attaching a 3M Post-it® note to the coating side of the coated membrane substrate, pulling the 3M Post-it® note away from the coated membrane substrate to test if the coating peels away from the substrate, and 3) attaching a piece of Scotch® tape to the coating side of the coated membrane substrate, pulling the Scotch® tape away to test if the coating peels away from the substrate. The examples described herein were tested for adhesion by rubbing the surface of the coated sample (rubbing the surface of the coating) using a tip of the tester's index finger and observing whether the coating rubs off the underlying substrate. If the coating adhered to the substrate with normal rubbing pressure using the tip of the tester's index finger, then the adhesion was described as "good". If the coating adhered to the substrate after very firm rubbing pressure using the tip of the tester's index finger, then the adhesion was described as "excellent".

Adhesion of a coated separator membrane to an electrode can be evaluated by a dry method adhesion test where a sample of a coated membrane is laminated to an electrode using heat and pressure. After cooling to room temperature, the electrode/coated membrane sample is hand pulled apart. The surface of the coated membrane is observed for the presence of electrode material, which is often black in appearance. The presence of electrode material on the surface of the pulled-apart coated separator membrane indicates the coating layer was very well adhered to the electrode.

### Hot Tip Hole Propagation Test

A hot tip probe at a temperature of 450°C with a tip diameter of 0.5 mm is moved toward a surface of a test sample of separator that sits atop aluminum foil situated on a glass substrate as shown in Figure 12. The hot tip probe is advanced towards the sample at a speed of 10mm/min and is allowed to contact the surface of the test sample for a period of 10 seconds. Results of the test are presented as a digital image taken with an optical microscope showing both the shape of the hole and the size of the hole in millimeters after the hot tip probe is removed. Minimal propagation of a hole in a separator test sample from contact with the hot tip probe simulates the desired response of the separator to a localized hot spot, which may occur during an internal short circuit in a lithium ion battery.

It should be recognized that the above embodiments are merely illustrative of the principles of the present invention. Numerous modifications and adaptations will be readily apparent to those skilled in the art without departing from the spirit and scope of this invention. The present invention may be embodied in other forms without departing from the spirit and the attributes thereof, and, accordingly, reference may be made to the appended claims, and/or to the foregoing specification, as indicating the scope of the invention. Additionally, the invention disclosed herein suitably may be practiced in the absence of any element which is not specifically disclosed herein.

### Clauses

1. A separator for a lithium battery comprising a porous substrate and a coating layer formed on at least one surface of the porous substrate, wherein the coating layer is formed from a coating slurry comprising ceramic particles and a polymeric binder, wherein the polymeric binder is dispersed in water or an aqueous solution.
2. The separator of clause 1, wherein the separator is for a secondary lithium battery.
3. The separator of clause 1, wherein the substrate is microporous.
4. The separator of clause 1, wherein the coating is porous.
5. The separator of clause 4, wherein the coating is microporous.
6. The separator of clause 1, wherein the polymeric binder is polyvinylidene fluoride (PVDF) homopolymer, a copolymer of PVDF, or a mixture thereof, and wherein said copolymer of PVDF comprises PVDF and/or vinylidene fluoride (VF₂) co-polymerized with one or more of hexafluoropropylene (HFP or [-CF(CF₃)-CF₂-]), chlorotrifluoroethylene (CTFE), and tetrafluoroethylene (TFE).
7. The separator of clause 1, wherein the ceramic particles comprise one or more of metal oxides, metal hydroxides, metal carbonates, silicates, kaolin, talc, minerals, glass, and mixtures thereof, and wherein said metal oxides include one or more of aluminum oxide (Al₂O₃), titanium oxide (TiO₂), silicon oxide (SiO₂), zinc oxide (ZnO₂), and mixtures thereof.
8. The separator of clause 1, wherein the ceramic particles are 50 nm to 1,000 nm in average diameter.
9. The separator of clause 1, wherein the coating layer comprises between about 50% and about 95% by weight ceramic particles and between about 5% and about 50% by weight polymeric binder.
10. The separator of clause 1, wherein the porous substrate is a single layer, bilayer, trilayer, or multilayer porous membrane.
11. The separator of clause 1, wherein a thickness of the coating layer is from about 2 to about 10 µm.
12. The separator of clause 1, wherein an aqueous solution of the polymeric binder further comprises one or more of a de-bubbling agent, a dispersant, a de-foaming agent, a filler, an anti-settling agent, a leveler, a rheology modifier, a wetting agent, a pH buffer, a fluorinated surfactant, a non-fluorinated surfactant, a thickener, an emulsification agent, a fluorinated emulsifier, a non-fluorinated emulsifier, and a fugitive adhesion promoter.
13. The separator of clause 1, wherein the porous substrate is a microporous membrane comprising one or more polyolefins.
14. A separator for a lithium battery comprising a porous substrate and a coating layer formed on at least one surface of the porous substrate, wherein the coating layer is formed from a coating slurry comprising ceramic particles, one or more water-soluble polymeric binders and one or more water-insoluble polymeric binders wherein the solvent is water.
15. The separator of clause 14, wherein the substrate is microporous.
16. The separator of clause 14, wherein the coating is porous.
17. The separator of clause 14, wherein the coating is microporous.
18. The separator of clause 14, wherein the water-insoluble polymeric binder is polyvinylidene fluoride (PVDF) homopolymer, a copolymer of PVDF, or a mixture thereof, and wherein said copolymer of PVDF comprises PVDF and/or vinylidene fluoride (VF₂) co-polymerized with one or more of hexafluoropropylene (HFP or [-CF(CF₃)-CF₂-]), chlorotrifluoroethylene (CTFE), and tetrafluoroethylene (TFE).
19. The separator of clause 14, wherein the water-soluble polymeric binder is carboxymethyl cellulose, a polyvinyl alcohol, a polylactam, or a polyacrylate.
20. A process for producing a coated separator for a lithium battery, which process comprises the steps of: (a) providing a porous substrate, (b) applying a coating slurry on at least one surface of the porous substrate, wherein the coating slurry comprises ceramic particles and polymeric binders in water or an aqueous solution or suspension, and (c) drying the coating slurry to form a coating layer on the porous substrate.
21. The process of clause 20, further comprising the step of mixing the ceramic particles and aqueous solution of polymeric binders together, wherein said mixing is accomplished by one or more of high shear mixing and ball mill mixing.
22. The process of clause 20, further comprising the step of mixing the ceramic particles, a dispersant and aqueous solution of water-soluble and water insoluble polymeric binders together, wherein said mixing is accomplished by one or more of high shear mixing and/or ball mill mixing.
23. The process of clause 20, wherein the coating slurry is dried at a temperature of 40°C or greater.
24. A lithium ion battery comprising electrodes, an electrolyte, and the separator of clause 1, wherein, at a temperature above a melt temperature of the polymeric binder, the ceramic particles in the coating layer maintain an amount of physical separation between the electrodes in the lithium battery, thereby preventing contact of the electrodes.
25. A lithium ion battery comprising electrodes, an electrolyte, and the separator of clause 1, wherein the coating layer prevents or reduces a likelihood of an oxidation reaction from occurring at an interface between the separator and one or more electrodes.
26. A process for producing a coated separator for a lithium ion battery, which process comprises the steps of: (a) providing a porous substrate, (b) applying a coating slurry on at least one surface of the porous substrate, wherein the coating slurry comprises ceramic particles and polymeric binders in water or an aqueous solution or suspension, and (c) drying the coating slurry to form a coating layer on the porous substrate.
27. The process of clause 26, further comprising the step of mixing the ceramic particles and aqueous solution of polymeric binders together, wherein said mixing is accomplished by one or more of high shear mixing and ball mill mixing.
28. The process of clause 26, further comprising the step of mixing the ceramic particles, a dispersant and aqueous solution of water-soluble and water insoluble polymeric binders together, wherein said mixing is accomplished by one or more of high shear mixing and/or ball mill mixing.
29. The process of clause 26, wherein the coating slurry is dried at a temperature of 40°C or greater.
30. A lithium battery comprising electrodes, an electrolyte, and the separator of clause 14.

## Claims

1. A separator for a lithium battery comprising:
a porous or microporous substrate, the porous or microporous substrate optionally comprises one or more polyolefins, and
a coating layer formed on at least one surface of the porous or microporous substrate, the coating layer is formed from an aqueous coating slurry comprising ceramic particles and a polymeric binder, the aqueous coating slurry optionally further comprises at least one of a de-bubbling agent, a dispersant, a de-foaming agent, a filler, an anti-settling agent, a leveler, a rheology modifier, a wetting agent, a pH buffer, a fluorinated surfactant, a non-fluorinated surfactant, a thickener, an emulsification agent, a fluorinated emulsifier, a non-fluorinated emulsifier, and/or a fugitive adhesion promoter,
and wherein the polymeric binder comprises at least one water-insoluble polymeric binder and at least one water-soluble polymeric binder selected from the group consisting of carboxymethyl cellulose, a polyvinyl alcohol, a polylactam, a polyacrylic acid, a polyvinyl acetate, and/or a polyacrylate.

2. The separator of claim 1, wherein the ceramic particles comprise one or more of metal oxides, metal hydroxides, metal carbonates, silicates, kaolin, talc, minerals, glass, and mixtures thereof, and wherein said metal oxides include one or more of aluminum oxide (Al₂O₃), titanium oxide (TiO₂), silicon oxide (SiO₂), zinc oxide (ZnO₂), and mixtures thereof, and optionally have an average diameter of 50 to 1,000 nm.

3. The separator of claim 1, wherein the coating layer comprises between 50% and 95% by weight ceramic particles and between 5% and 50% by weight polymeric binder.

4. The separator of claim 1, wherein a thickness of the coating layer is from 2 to 10 microns.

5. The separator of claim 1, wherein the coating layer is porous or microporous.

6. The separator of claim 1, wherein the porous or microporous substrate is a single layer, bilayer, trilayer, or multilayer porous or microporous membrane.

7. A lithium battery comprising electrodes, an electrolyte, and the separator of claim 1.

8. A process for producing a coated separator for a lithium battery, which process comprises the steps of:
(a) providing a porous or microporous substrate;
(b) applying an aqueous coating slurry on at least one surface of the porous or microporous substrate, the aqueous coating slurry comprises ceramic particles and a polymeric binder, the polymeric binder comprises at least one water-insoluble polymeric binder and at least one water-soluble polymeric binder selected from the group consisting of carboxymethyl cellulose, a polyvinyl alcohol, a polylactam, a polyacrylic acid, a polyvinyl acetate, and/or a polyacrylate;
(c) drying the coating slurry to form a coating layer on the porous or microporous substrate, wherein drying is optionally performed at a temperature of 40°C or higher; and
optionally (d) further comprising a step of mixing the ceramic particles and an aqueous solution comprising the polymeric binder together to form the aqueous coating slurry, wherein said mixing is accomplished by one or more of high shear mixing and ball mill mixing.

9. The method of claim 8, wherein the porous or microporous substrate is a single layer, bilayer, trilayer, or multilayer porous or microporous membrane.

10. A lithium ion battery comprising electrodes, an electrolyte, and the separator of claim 1, wherein, at a temperature above a melt temperature of the polymeric binder, the ceramic particles in the coating layer maintain an amount of physical separation between the electrodes in the lithium battery, thereby preventing contact of the electrodes and/or wherein the coating layer prevents or reduces a likelihood of an oxidation reaction from occurring at an interface between the separator and one or more electrodes.

11. The separator of claim 6, wherein the single layer, bilayer, trilayer, or multilayer porous or microporous membrane is a dry process polyolefinic membrane.

12. The method of claim 9, wherein the single layer, bilayer, trilayer, or multilayer porous or microporous membrane is a dry process polyolefinic membrane.

13. The separator of claim 1, wherein the water-insoluble polymer is selected from the group consisting of a copolymer of polyvinylidene fluoride (PVDF), said copolymer of PVDF comprises at least one of (PVDF) and vinylidene fluoride (VF₂) copolymerized with at least one of hexafluoropropylene (HFP or [-CF(CF₃)-CF₂-]), chlorotrifluoroethylene (CTFE), and tetrafluoroethylene (TFE).

14. The process of claim 8, wherein the water-insoluble polymer is selected from the group consisting of a copolymer of polyvinylidene fluoride (PVDF), said copolymer of PVDF comprises at least one of (PVDF) and vinylidene fluoride (VF₂) copolymerized with at least one of hexafluoropropylene (HFP or [-CF(CF₃)-CF₂-]), chlorotrifluoroethylene (CTFE), and tetrafluoroethylene (TFE).

15. A coated membrane:
a porous or microporous substrate, the porous or microporous substrate optionally comprises one or more polyolefin membranes, and
a coating layer formed on at least one surface of the porous or microporous substrate, the coating layer is formed from an aqueous coating slurry comprising ceramic particles and a polymeric binder, and the aqueous coating slurry optionally further comprises at least one of a de-bubbling agent, a dispersant, a de-foaming agent, a filler, an anti-settling agent, a leveler, a rheology modifier, a wetting agent, a pH buffer, a fluorinated surfactant, a non-fluorinated surfactant, a thickener, an emulsification agent, a fluorinated emulsifier, a non-fluorinated emulsifier, a fugitive adhesion promoter, and/or combinations thereof,
optionally wherein the polymeric binder comprises at least one water-insoluble polymeric binder and at least one water-soluble polymeric binder selected from the group consisting of carboxymethyl cellulose, a polyvinyl alcohol, a polylactam, a polyacrylic acid, a polyvinyl acetate, and/or a polyacrylate.
